(19) Europäisches Patentamt
European Patent Office
Office européen des brevets

(11) **EP 2 844 000 A1**

(12) **EUROPEAN PATENT APPLICATION**

(43) Date of publication:
**04.03.2015 Bulletin 2015/10**

(51) Int Cl.:
*H04W 40/22* (2009.01)       *H04W 88/04* (2009.01)

(21) Application number: **13182366.8**

(22) Date of filing: **30.08.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **SITILabs - I&D em Sistemas e Tecnologias Informáticas**
**1749-024 Lisboa (PT)**

(72) Inventors:
• **Jamal, Tauseef**
  **2620-140 Lisboa (PT)**
• **Mendes, Paulo**
  **1990-002 Lisboa (PT)**

(74) Representative: **Betten & Resch**
**Theatinerstrasse 8**
**80333 München (DE)**

(54) **Cooperative relaying for dynamic networks**

(57)    A method for enhancing data communication between a source and a destination in a wireless network, wherein a data packet is transmitted from the source to the destination via a relay node, the method being performed in the relay node and comprising the steps of: overhearing by said relay node a relay need control message sent from the destination to the source indicating the need for relaying data packets which are to be sent from said source to said destination;
determining by the relay node its degree of qualification to act as a relay node for relaying data packets;
transmitting by the relay node a qualification message, QM, to the destination indicating the degree of qualification; and
receiving, by the relay node, a data packet to be relayed from the source and relaying it to the destination if the relay node was selected by the destination for relaying data packets based on the QM.

Fig. 1

EP 2 844 000 A1

**Description**

**FIELD OF INVENTION**

The present invention relates to methods and apparatuses for cooperative relaying for dynamic networks.

**BACKGROUND OF THE INVENTION**

Over the past decade, Internet access became essentially wireless, with 802.11 technologies providing a low cost broadband support for a flexible and easy deployment. However, channel conditions in wireless networks are subjected to interference and multipath propagation, creating fading channels and decreasing the overall network performance. While fast fading can be mitigated by having the source retransmitting frames, slow fading, caused by obstruction of the main signal path, makes retransmission useless, since periods of low signal power lasts for the entire duration of the transmission.

Extensive research has been done to mitigate the impact of shadowing in wireless networks, being mostly focused on Multiple-Input Multiple-Output (MIMO) systems. Recently, cooperative relaying techniques have been investigated to increase the performance of wireless systems by using diversity created by different single antenna devices, aiming to reach the same level of performance of MIMO systems.

Cooperation occurs when overhearing relays assist the transmission from source to destination, by transmitting different copies of the same signal from different locations, allowing the destination to get independently faded versions of the signal that can be combined to obtain an error-free signal.

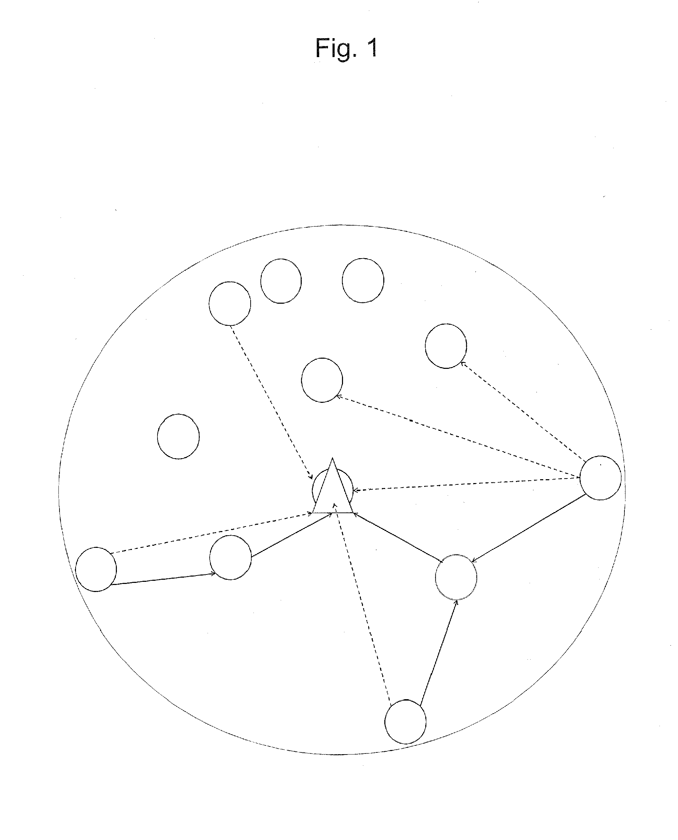

Figure 1 shows a pair of single antenna devices able to act as relays of each other by forwarding some version of "overheard" frames along with its own data. Since the fading channels of two different devices are statistically independent, this generates spatial diversity. The development of cooperative relaying systems, of which Figure 1 illustrates a simple scenario, raises several research issues including the performance impact on the relay itself, and the interference on the overall network, leading to a potential decrease in network capacity and transmission fairness.

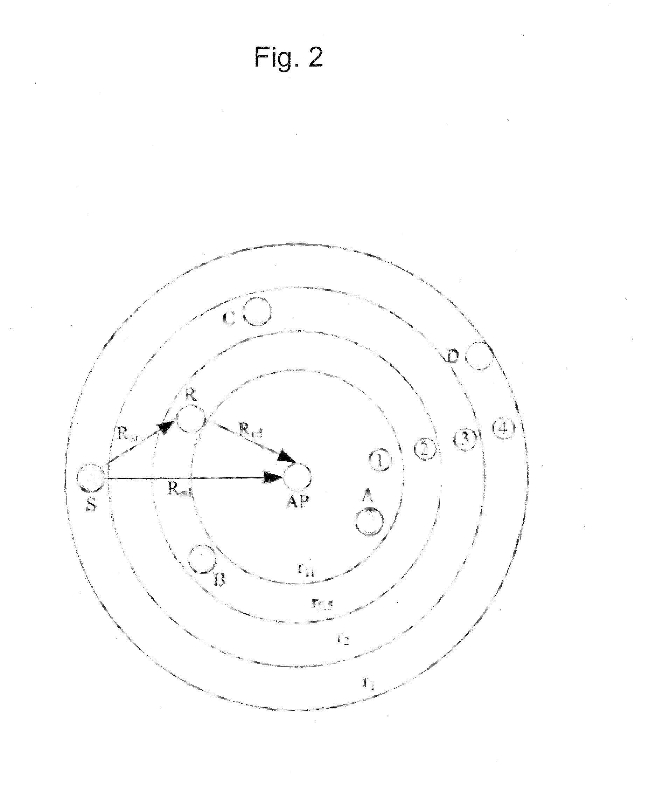

In 802.11 networks, the low quality (throughput and reliability) and short coverage of the direct link between a source and a destination are mainly due to the shadowing and fading effects of the wireless environment. There are however other constrains in wireless networks such as limited power, size of devices, and distance. Due to the distance from the Access Point (AP), a mobile node can observe a bad channel as compared to other nodes that are closer to the AP. Figure 2 shows the transmission characteristics of some nodes, as a result of the rate adaptation functionality of IEEE 802.11: stations closer to the AP transmit at high data rates, while stations far away from the AP decrease their data rate after detecting missing frames.

The usage of rate adaptation schemes results in a degradation of the overall network performance, since low data rate stations grab the wireless medium for a longer time. This occurs since each station has the same probability to access the channel, which means that high data rate stations will not be able to keep the desirable throughput.

As illustrated in Figure 2, the station at the cell edge adapts its data rate to 1 Mbps, and its frames are overheard by the high data rates stations. The latter ignore this overheard information and drops the frames. Cooperative relaying is a very simple, and yet effective solution, to mitigate the problems raised by the presence of low data rate stations. With cooperative relaying, high data rate stations help low data rate stations to release the medium earlier, by relaying their data over channels with higher data rates. This way high data rate stations will be able to transmit earlier, increasing the overall system performance. In cooperative communications, nodes in a wireless network work together to form a virtual antenna array.

The basic ideas behind cooperative communication can be traced back to the relay channel model in information theory extensively studied in the 1970s. Recent research on cooperative communication demonstrates the benefits of cooperative relaying in a wireless environment by achieving spatial diversity. Moreover, most of the research being done focuses on the physical layer (cooperative communications), by exploiting spatial diversity to increase system reliability of cellular networks. Recently, the exploitation of link-layer diversity (cooperative relaying) in cellular and multi-hop wireless networks has attracted considerable research attention. Cooperative techniques utilize the broadcast nature of wireless signals: the source node sends data for a particular destination, and such data can be "overheard" at neighbouring nodes; these neighbouring nodes, called relays, partners, or helpers, process the data they overhear and transmit it towards the destination; the destination receives the data from the relay or set of relays (on behalf of the source) enabling higher transmission rate, or combines the signals coming from the source and the relays enabling robustness against channel variations. Such spatial diversity arising from cooperation is not exploited in current cellular, wireless LAN, or ad-hoc systems. Hence, cooperative relaying is different from traditional multi-hop or infrastructure based methods. Therefore, for cooperation to be implemented at the link layer, link layer needs to be changed in order to allow indirect transmission between source and destination. In scenarios with fading channels and low data rate stations, high throughput, reliability, and coverage may be possible to achieve with an efficient cooperative Medium Access Control (MAC) layer based on a modifying version of the DCF signalling scheme.

Cooperative relaying can be divided into two major parts: i) relay transmission protocol (relaying protocol); ii) relay selection. Cooperative relaying protocols can be classified into proactive schemes and reactive schemes. In the former, the cooperation from relay(s) is always provided either by a prearranged or a random set of relay(s) before the acknowledgment (ACK or NACK) from the receiver. In the latter, the help from the relay(s) is initiated only when the direct transmission fails (lack of ACK or overheard NACK). Irrespective of the class of relaying protocol, the operation can be opportunistic or cooperative. Cooperative relaying protocols are normally initiated by source or destination, where relays are selected prior to data transmission. Such protocols require additional control/handshake messages, which pose additional overhead. In the case of opportunistic relaying protocols, the relay(s) opportunistically forward the overheard data to destination and the destination acknowledge the reception of data by sending ACK to the source. Source and destination may not have prior knowledge of selected relay(s). Such mechanisms are prone to collision as there is no coordination between nodes.

The definition of MAC cooperative schemes poses several challenges, especially in the presence of mobile nodes. A major challenge is related to relay selection, which aims to identify the most suitable relay(s) for assisting transmissions between any pair of nodes. Research is on-going to devise efficient relay selection at MAC layer, being the proposed approaches mostly source or destination based. In the former case, the source maintains a table with Channel State Information (CSI) of neighbouring devices to support relay selection. In destination-based approaches, the destination decides whether to use relaying or not, based on thresholds and CSI kept on the destination and on potential relays. Both approaches incur in some overhead (especially source-based) and are not efficient reacting to network changes, mainly in the presence of mobile nodes.

Common examples of cooperative relaying schemes are source-based relaying that use one relay or two relays in parallel. Source-based relaying approaches require the sources to maintain a table of CSI that is updated by potential relays based upon periodic broadcasts. An example is described by P. Liu et al. in "CoopMAC: A Cooperative MAC for Wireless LANs," IEEE Journal on Selected Areas in Communications, vol. 25, no. 2, pp. 340-354, Feb. 2007. In CoopMAC, the source can use an intermediate node (called helper) that experiences relatively good channel with the source and the destination. Instead of sending frames directly to the destination at a low transmission rate, the source makes use of a two-hop high data rate path to the destination via a helper. In case of CoopMAC, potential helpers overhear ongoing RTS/CTS transmissions for measuring the source-helper and helper-destination CSI. Based on the CSI broadcasted by potential helpers, sources update a local table (cooptable) used to select the best relay for each transmission. In general, source-based approaches undergo two main problems: channel estimation and periodic broadcasts, which introduce overhead that is problematic in mobile scenarios.

While source-based proposals follow a proactive approach, reactive cooperative methods rely on relays to retransmit on behalf of the source when the direct transmission fails. An example is PRO described by L. Mei-Hsuan et al. in "Design, Implementation and Evaluation of an Efficient Opportunistic Retransmission Protocol," in Proc. Of IEEE MobiCom, Beijing, China, Apr. 2009. PRO selects relays among a set of overhearing nodes in two phases: first, a local qualification process takes place at potential relays, during which the link quality is compared with some predefined threshold, leading to the identification of qualified relays. In a second phase, qualification information is broadcasted, allowing qualified relays to set scheduling priorities. However, reactive approaches face the same challenges as source-based methods.

In what concerns relay selection mechanisms, the basic mechanism defines an opportunistic behaviour in which all overhearing nodes estimate the CSI of sender-node and node-destination links, based on which they set a timer such that nodes with better channel conditions broadcast first their qualification as relays, or even data to be relayed. Such mechanisms present a high probability of collision, as well as low efficiency in mobile scenarios due to CSI measurements.

Another reactive approach for cooperative relaying is described in patent application US 2011/0122933 A1 in which a message is used between potential relays and destination, allowing potential relays to inform the destination about their availability to relay data. The relay is only selected if the direct link fails. The destination detects the failure of the direct link and sends a NACK to the source. The source sends a control message explicitly asking potential relays to forward new data (ECR message). Potential relays try to choose a slot in a contention window to send a control message (applying for relaying - AFR) to the destination. The destination selects a relay by sending another control message (SFR) to the selected relay. The selected relay forwards the failed data on behalf of source. As with the other approaches described above, the signalling overhead is problematic.

In view of the prior art it is therefore an object of the present invention to provide methods and apparatuses to ensure accurate and fast relay selection, posing minimum overhead and reducing the dependency upon CSI estimations, which is essential to increase system performance in scenarios with mobile nodes.

## SUMMARY OF THE INVENTION

According to one embodiment there is provided a method for enhancing data communication between a source and a destination in a wireless network, wherein a data packet is transmitted from the source to the destination via a relay node. The relay node overhears a relay need control message sent from the destination to the source indicating the need for relaying data packets which are to be sent from said source to said destination. The relay node also determines its degree of qualification to act as a relay node for relaying data packets and transmits a qualification message, QM, to the destination indicating the degree of qualification. The relay node finally receives a data packet to be relayed from the source and relays it to the destination if the relay node was selected by the destination for relaying data packets based on the QM.

According to one embodiment, a corresponding method is performed in a destination. The destination receives one or more QMs from one or more potential relays which indicate the degree of qualification of the respective relay nodes to act as a relay node for relaying data packets. Based on the received QMs, the destination selects one or more relay nodes for relaying data packets and transmits a selection control message to the source indicating the selected one or more relays.

According to one embodiment, a corresponding method is performed in a source. The source receives a selection control message from the destination node indicating the relay which was selected based on the QM received by the destination from the relay node. Subsequently, the source transmits the data packet to be relayed to the relay node for transmission to the destination.

This approach represents a new type of cooperative relaying scheme based upon local decisions that do not rely on unstable information (e.g., CSI) collected over multiple links. A basic characteristic is the capability to perform local relaying decisions at the one or more potential relay nodes, wherein nodes intermediate between source and destination take the opportunity to relay in the presence of local favourable conditions (e.g., good degree of qualification, no concurrent traffic). Thus, the approach ensures accurate and fast relay selection, poses minimum overhead, and reduces the dependency upon CSI estimations and therefore increases system performance, in particular in scenarios with mobile nodes.

Minimisation of additional control messages is achieved by taking decisions at the entity where the information is available. Thus, unnecessary transmission of information is avoided. For example, the relay node can determine its degree of qualification as a relay node by overhearing control messages exchanged between the source and the destination. This avoids transmission of corresponding information to other nodes.

In particular, the approach has the following advantages:

- It does not require maintenance of CSI tables, avoiding periodic updates and consequent broadcasts. Reduces dependency over CSI.

- It avoids overhead of additional control messages, for example a direct message from the destination to a node informing it that it is selected as relay node.

According to one embodiment the degree of qualification of the relay node is determined by the relay node based on a quality of the source-relay link as e.g. indicated by the data rate between the source and the relay which can be determined by overhearing e.g. the RTS message sent from the source to the destination and measuring the signal to noise ratio (SNR) of the received signal. This, based on the known relationship between SNR and the bitrate of the RTS message, enables a simple determination of the degree of qualification e.g. by overhearing a transmission from the source to the destination.

According to one embodiment the method comprises:

determining said degree of qualification based on a quality of the source-relay link, preferably indicated by the data rate between source and relay and a quality of the destination-relay link, preferably indicated by the data rate between destination and relay, wherein the step of sending a QM is only performed if said degree of qualification indicates that the data rate from the source to the destination via the relay is larger than the data rate of the direct source.

In this manner the relay node can determine its degree qualification to act as a relay node based on the quality, preferably indicated by the data rates between source and relay and between the destination and the relay and between the source and the destination. If the data rate via the relay is larger, then this indicates the qualification of the relay node to act as a relay, since it may improve then the data rate compared with the direct source destination link.-

Preferably the qualification message is sent only if the degree of qualification indicates that the selection of a relay node for relaying packets enhances the communication between the source and destination compared with the direct link.

According to one embodiment, determining the degree of qualification is based on the determination of a cooperation factor as an indication of said degree of qualification. The cooperation factor may be based on a quality (preferably the data rate) of the source-relay link and a quality (preferably the data rate) of the destination-relay link. The step of sending a QM is only performed if the degree of qualification indicated by said cooperation factor satisfies a relaying condition which requires that the selection of the relay leads to an improvement compared with the present link between source and destination.

In this way, the decision whether a node qualifies as a relay node (and may offer itself as a relay node) is made at the relay node, wherein the decision is based on both links relevant for relaying, i.e. the source-relay link and the destination-relay link. Further, the QM is only sent to the destination if the relaying condition is fulfilled. This avoids transmission of control messages which would be necessary if the decision was made at the source or the destination.

According to one embodiment, the cooperation factor determined at the relay node indicates a data rate between the source and the destination via the relay based on the destination-relay node link and the source-relay node link, wherein the relay need control message indicates a data rate of the direct source-destination link without a relay, and wherein the relaying condition is satisfied if the data rate via the relay is larger than the data rate of the direct source-destination link.

In this way, the decision whether a node qualifies as a relay node is directly based on a highly relevant criterion, i.e. whether the data packets can be transmitted with a higher data rate when transmitted through the relay node than when transmitted directly from the source to the destination.

According to one embodiment the method comprises one or more of the following:

determining the quality of the source relay link based on overhearing by the relay node the RTS message sent from the source to the destination;

determining the quality of the destination relay link based on overhearing by the relay node the CTS message sent from the destination to the source;

sending said qualification message from said relay node to said destination, preferably in form of a RTS message containing an indication of the data rate between the source and the relay;

determining the relay to be selected by the destination node based on the data rate of the source destination link via said relay compared with the data rate a relay is selected which improves the data rate compared to the present data rate between source and destination; and

informing the source about the relay selection by sending the selection information included in an ACK frame sent from the destination to the source.

The quality or rate determination by overhearing the RTS and CTS avoids any signalling overhead for determining the qualification degree.

Also the sending of the qualification message by a RTS message makes use of existing signalling mechanisms and allows backward compatibility with 802.11 versions.

Similarly, sending information about the selection of the relay node by an ACK message by embedding this information therein avoids any signalling overhead.

Moreover, by selecting the relay node in the destination there can be made effective use of all available information with a minimum of signalling overhead, and also the selection information can then be transferred to the source node without additional signalling overhead by embedding it into the ACK message.

In this manner maintaining CSI tables in source or destination the corresponding necessary broadcast messages can be avoided.

According to one embodiment, the QM is transmitted within a contention window which is set by the relay node based on a selection factor which is calculated based on one or more of interference, node degree, history, and load of the relay.

This increases the probability of successful transmissions from relays to the destination by giving more priority to relays that are more closely bounded to the destination, have less interference, and have higher pause times.

According to one embodiment, the relay need control message transmitted by the destination indicates a data rate of the source-destination link. This provides information to the source and the overhearing relay node about the need for relaying data packets and enables the (potential) relay node to determine its degree of qualification to act as a relay node.

According to one embodiment, said relay need control message is a CTS message sent from the destination to the source and contains information about the link quality, preferably indicated by the data rate, between the source and the destination, and wherein
if said link quality is below a certain threshold this triggers potential relay nodes to determine their degree of qualification and to send a QM if their degree of qualification indicates a better link quality if they are chosen as a relay.

In this manner the relay selection mechanism can be triggered by link quality information which is piggy-backed in the CTS message sent from the destination to the source.

According to one embodiment there is provided a method for enhancing data communication between a source and a destination in a wireless network, wherein a data packet is transmitted from the source to the destination via a relay node, the method being performed in the destination and comprising the steps of:

receiving by said destination one or more qualification messages, QM, from one or more potential relays indicating the degree of qualification of the respective relay nodes to act as a relay node for relaying data packets;

selecting one or more relay nodes for relaying data packets based on the one or more received QMs, and

transmitting a selection control message to the source indicating the selected one or more relays.

In this manner a cooperative scheduling can be implemented in the destination.

According to one embodiment the method comprises:

determining the quality of the source-destination link; and

transmitting a relay need control message to the source indicating need for relaying, based on the determined link quality.

In this manner the destination may inform the potential relay nodes about the need for their action, preferably by including this information in the CTS message. The potential relay nodes may then use this as a trigger for determining their degree of qualification.

According to one embodiment the destination starts a reception window, during which the one or more QMs are received by the destination.

In this manner the destination opens the potential relay to "apply" as relays by sending the QM during the reception window.

According to one embodiment, there is provided a method for enhancing data communication between a source and a destination in a wireless network, wherein a data packet is transmitted from the source to the destination via a relay node, the method being performed in the source and comprising the steps of:

receiving a selection control message from the destination node indicating the relay which was selected based on a qualification message, QM, received by the destination from the relay node; and
transmitting the data packet to be relayed to the relay node for transmission to the destination.

This enables the source to perform the communication via the relay based on the selection information received from the destination.

According to one embodiment, there is provided a relay node for enhancing data communication between a source and a destination in a wireless network, wherein a data packet is transmitted from the source to the destination via the relay node, wherein the relay node comprises means for performing the steps of a method in a relay node mentioned above.

According to one embodiment, there is provided a destination node for enhancing data communication between a source and said destination node in a wireless network by receiving a data packet from the source by said destination via a relay node, wherein the destination node comprises means for performing the steps of a method in a destination mentioned above.

According to one embodiment, there is provide a source node for enhancing data communication between said source node and a destination node in a wireless network by transmitting a data packet from the source to said destination via a relay node, wherein the source node comprises means for performing the steps of a method in a source mentioned above.

**BRIEF DESCRIPTION OF THE DRAWINGS**

Fig. 1 schematically illustrates cooperative relaying;

Fig. 2 schematically illustrates 802.11 rate adaptations;

Fig. 3 schematically illustrates the RelaySpot proactive functionality;

Fig. 4 schematically illustrates the RelaySpot reactive functionality;

Fig. 5 schematically illustrates opportunistic relay selection at relays;

Fig. 6 schematically illustrates cooperative relay scheduling at destination;

Fig. 7 schematically illustrates relay switching operation at relays;

Fig. 8 schematically illustrates the generic 802.11 frame structure;

Fig. 9 schematically illustrates opportunistic relay selection;

Fig. 10 schematically illustrates relay scheduling;

Fig. 11 schematically illustrates relay switching due to failure of current selected relay;

Fig. 12 schematically illustrates the state diagram of source node;

Fig. 13 schematically illustrates the WFACK state flowchart at source;

Fig. 14 schematically illustrates the CONTEND state flowchart at source;

Fig. 15 schematically illustrates the WFCTS state flowchart at source;

Fig. 16 schematically illustrates the state diagram of destination node;

Fig. 17 schematically illustrates the IDLE state flowchart for destination;

Fig. 18 schematically illustrates the WFDATA state flowchart for destination;

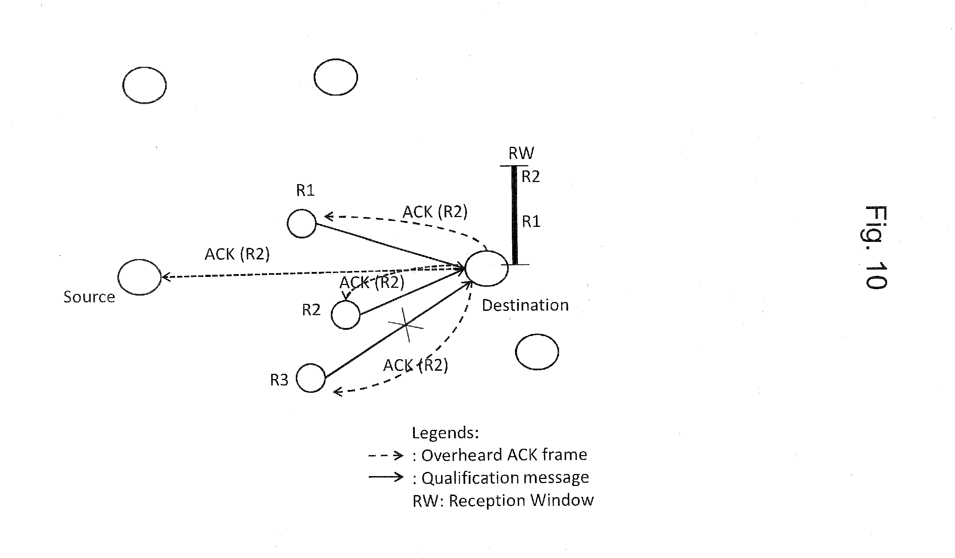

Fig. 10 schematically illustrates the State diagram of relay node;

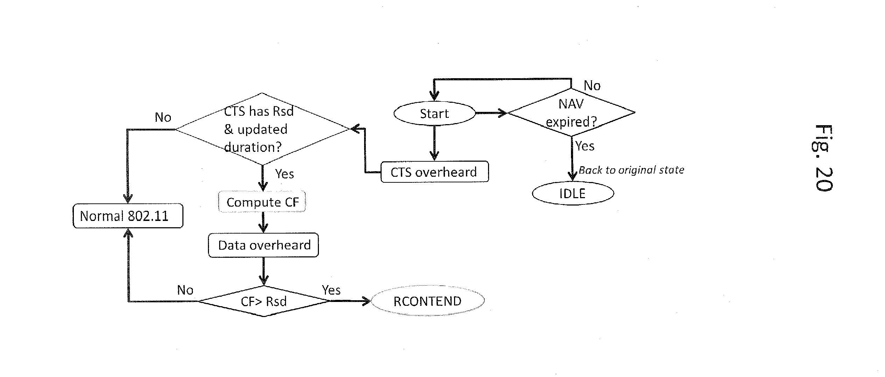

Fig. 20 schematically illustrates the QUIET state flowchart for relay;

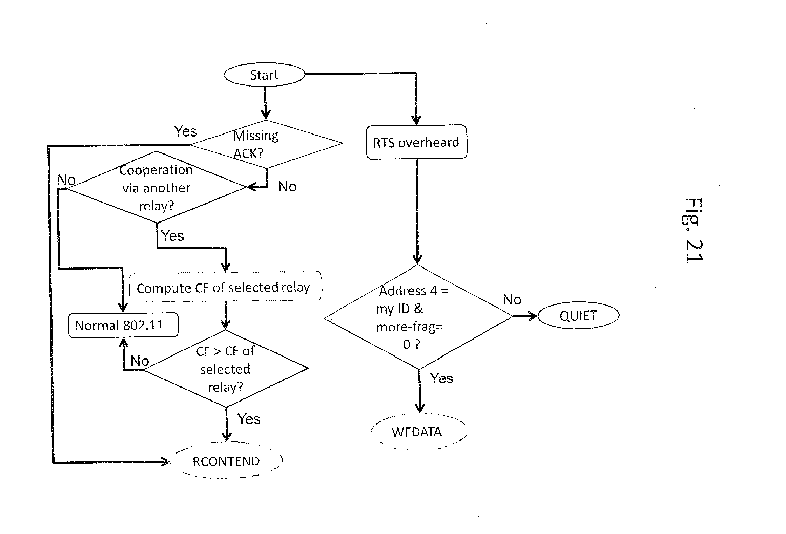

Fig. 21 schematically illustrates the IDLE state flowchart for relay;

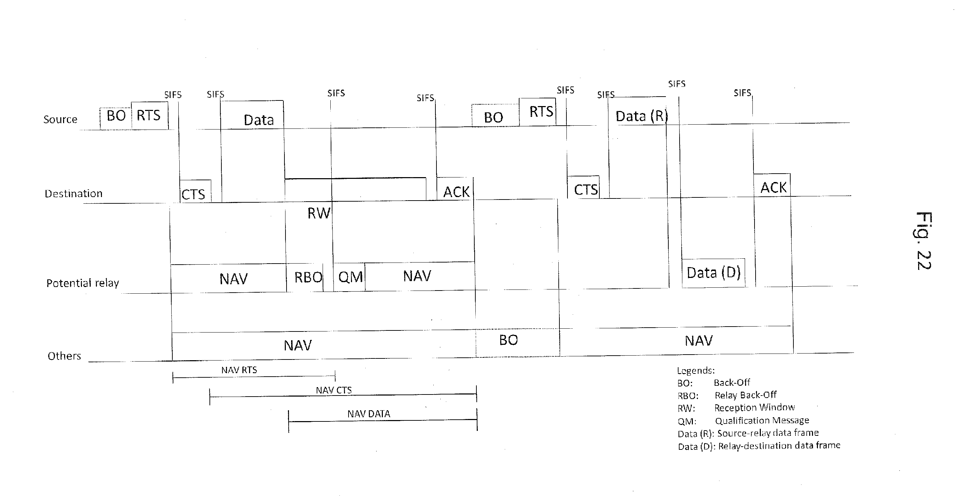

Fig. 22 schematically illustrates the Proactive mode;

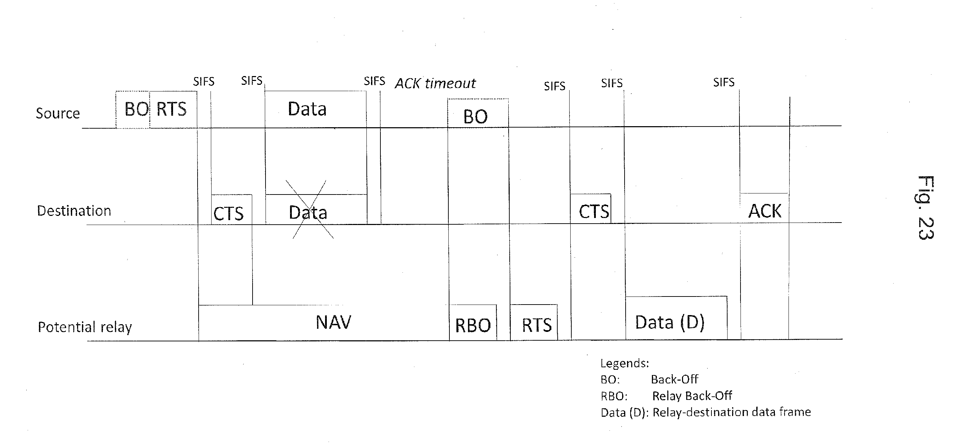

Fig. 23 schematically illustrates the Reactive RelaySpot without prior relay selection; and

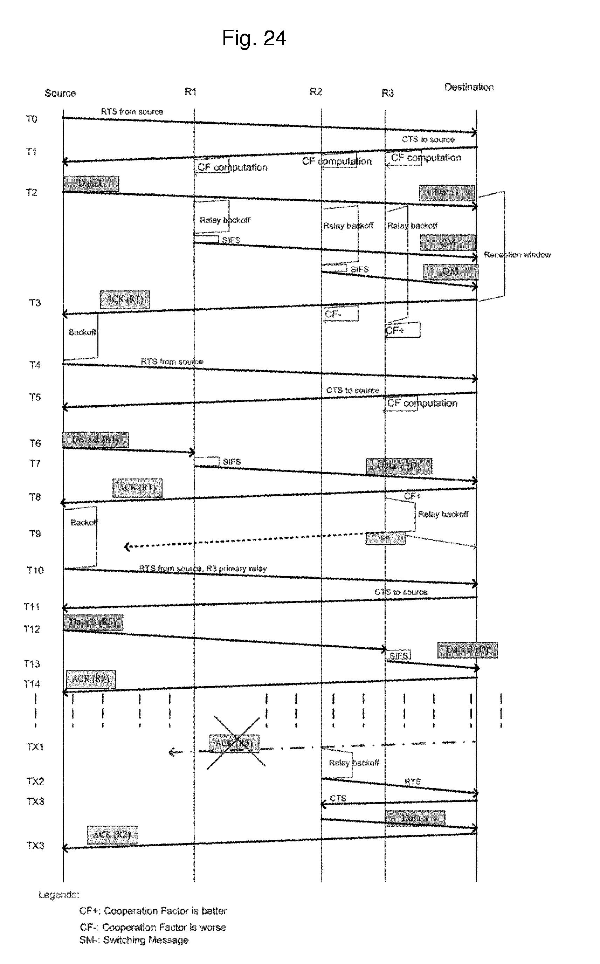

Fig. 24 schematically illustrates the Proactive RelaySpot with relay switching.

## DETAILED DESCRIPTION

The present invention will now be described by means of exemplary embodiments.

In the following, a new type of cooperative relaying scheme is described which is based upon local decisions that do not rely on unstable information (e.g., CSI) collected over multiple links. We describe an 802.11 backward compatible cooperative relaying framework, called RelaySpot, which aims to ensure accurate and fast relay selection, posing minimum overhead and reducing the dependency upon CSI estimations, which is essential to increase system performance in scenarios with mobile nodes. The basic characteristic of any RelaySpot-based solution is the capability to perform local relaying decisions at potential relay nodes (can be more than one), based on a combination of opportunistic relay selection and cooperative relay scheduling and switching. Intermediate nodes take the opportunity to relay in the presence of local favourable conditions (e.g., no concurrent traffic). Cooperative scheduling is used to compensate unsuccessful relay transmissions. The RelaySpot is the first framework that aims to create the basic conditions to allow relay selection to be done without relying on CSI estimation, and combines cooperative and opportunistic relaying.

The RelaySpot framework allows any node to perform local relaying decisions. This solution allows the creation of few-hop communication paths aiming to augment the quality of the wireless transmission and reduce the problem posed by low data-rate stations. In the following the RelaySpot components, generic node operation, and frame format are described.

### 1.1 RelaySpot Components

RelaySpot encompasses three components:

- **Opportunistic Relay Selection:** Intermediate nodes may take the opportunity to relay in the presence of local favourable conditions (e.g., no concurrent traffic) after detecting one of two situations: i) a broken communication; ii) a poor direct transmission, by analysing the wireless data rate;

- **Cooperative scheduling:** the destination node is able to cooperate in the relay selection procedure by electing one over several potential relays, based on the quality of the relays. *RelaySpot specification is prepared to allow the cooperative scheduling mechanism to create diversity higher than two, by selecting more than one relay.*

- **Relay Switching:** this functionality aims to compensate unsuccessful relay transmissions. Relay selection faces several optimization problems that are difficult to solve, which means that the best relay may be difficult to find by the destination based on the set of potential relays. Hence, aiming to be suitable for dynamic scenarios, RelaySpot allows the destination to select the best possible relaying opportunity even if not the optimal one (e.g., in terms of CSI). In order to keep a good quality level in case of a bad decision from the destination, RelaySpot allows potential relays to take over the control of the relay operation, by asking the source to switch the relay for the subsequent data frames.

**1.2 Generic Operation**

This section describes the general functionality of a node running RelaySpot, in which case the node can operate as a source, potential relay or as a destination for each flow. RelaySpot can be used when the direct link between source and destination exists (proactive mode), or when the direct link fails (reactive mode).

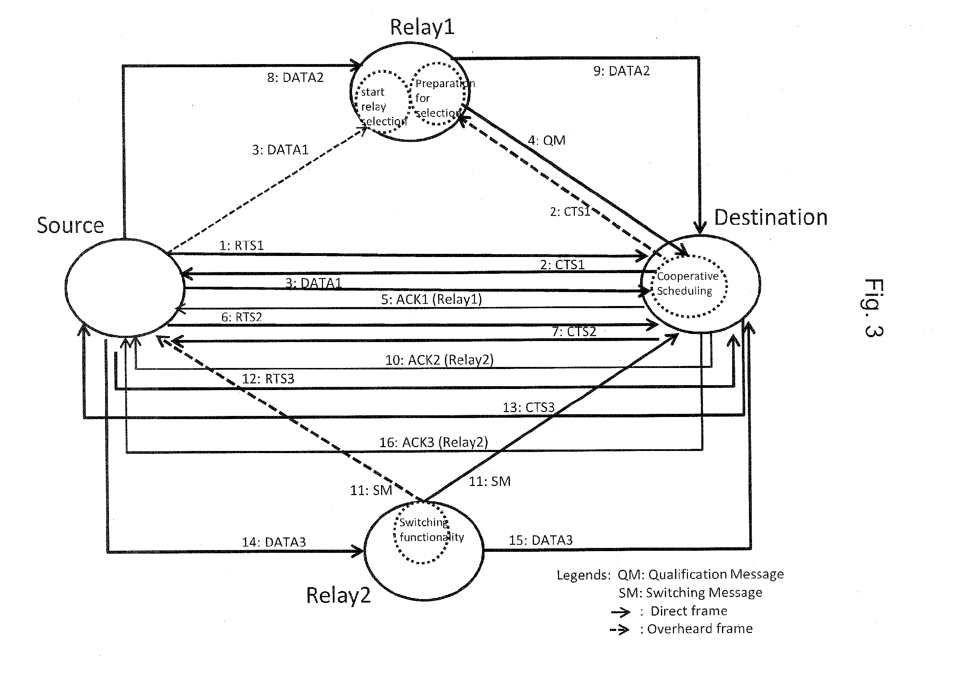

Fig. 3 illustrates the proactive operation of a RelaySpot node, based on an example with one source, two potential relays and one destination (the numbers before the messages refer to the order in which the frames are sent).

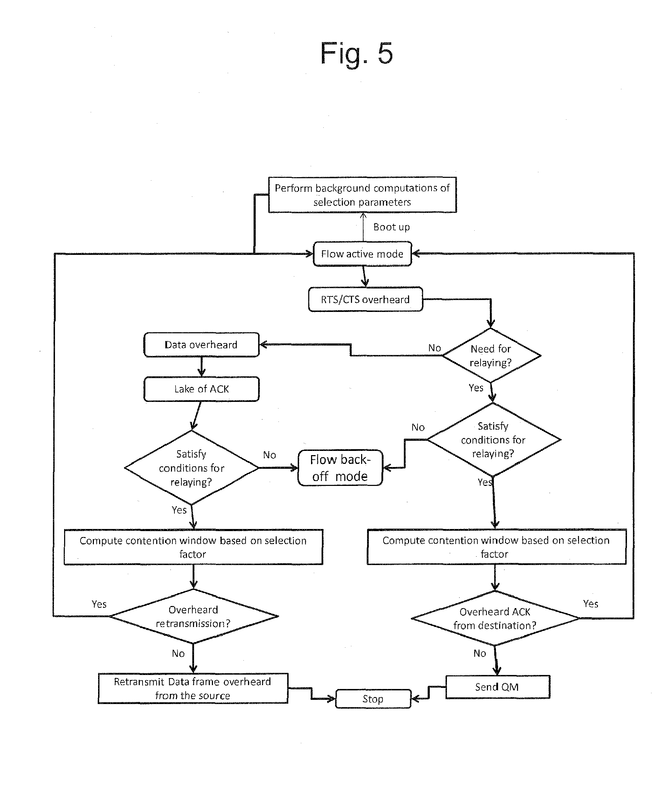

As shown in Fig. 3, the operation starts as in a normal 802.11 network with the source starting a request to send (RTS) / clear to send (CTS) procedure with the destination in order to gain access to the wireless medium. Based on the RTS message received from the source, the destination estimates the quality and the data rate of the direct link, i.e. the source-destination link and sends a relay need control message to the source which indicates the need for a relay based on the determined data rate or quality, e.g. if a certain threshold is not achieved for the data rate or the quality. The information that there is a need for a relay may in one embodiment be included in the CTS message (which therefore is also to be understood to form a *relay need control message* for the purpose of the embodiments described in the present specification, at least if it includes the information that a relay is needed). In the process, Relay2 (the potential relay present in the vicinity) overhears the CTS message and estimates the quality and/or the data rate of the direct link based on the CTS message. When the source transmits the data frame, this is overheard by Relay2, which activates the opportunistic relay selection mechanism in this node. This mechanism will be described in more detail in connection with fig. 5 and in section 2.1.1. As a result Relay2 transmits a Qualification Message (QM) to the destination aiming to notify it of Relay2 availability to relay data from the source. The QM indicates the degree of qualification of Relay2 which is based on the quality of the source-Relay2 link. In particular, the QM may indicate the data rate of the source-Relay2 link. Based on the information received from Relay2 in the QM, the destination acknowledges the reception of the data frame and notifies the source that subsequent data frames should be sent via Relay2, since this offers better quality transmission. Therefore, the acknowledgement message which includes information about the relay to be selected is also designated *selection control message* for the purpose of the embodiments described in this specification. As a result, the source sends the next data frame through Relay2, after gaining again access to the wireless medium by executing the RTS/CTS operation with the destination. The reception of this message is acknowledged by the destination, informing the source that frames should be kept being send via Relay2. This acknowledgment message is overheard by a new potential relay in the vicinity (Relay3), which, after comparing its own cooperation factor with the one from Relay2, notifies the source and destination that it is a better relay than Relay2. As a consequence, the next time that the source gains access to the wireless medium (through a RTS/CTS procedure) it will send the data frame through Relay3.

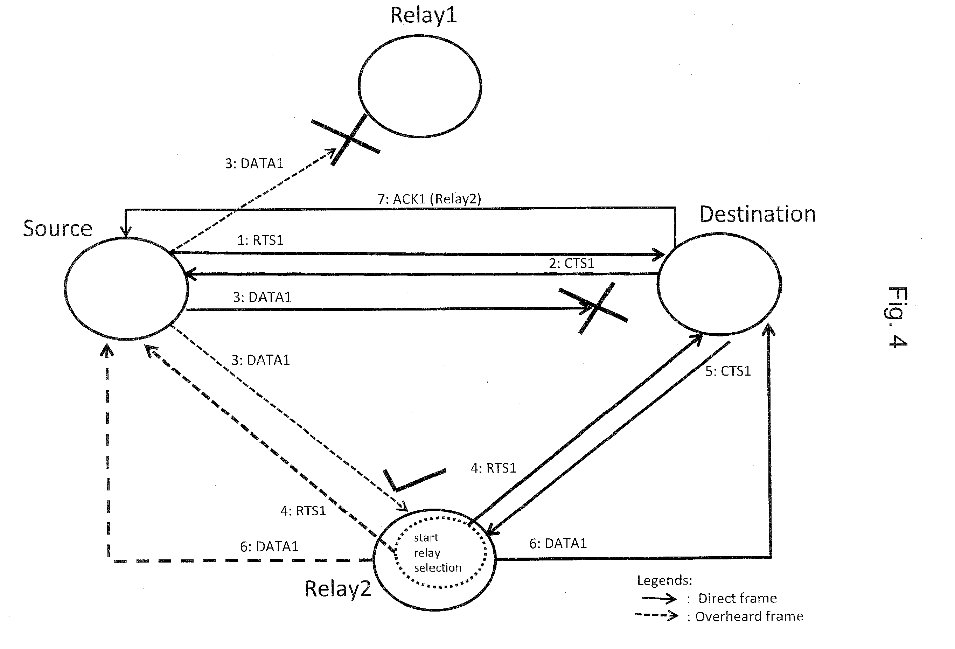

Fig. 4 illustrates the reactive operation of a RelaySpot node, based on an example with one source, two potential relays and one destination (the numbers before the messages refer to the order in which the frames are sent). In this scenario, the direct link has enough quality for the exchange of RTS/CTS frames, but not enough bandwidth for the transmission of the data frame. This means that the transmission between source and destination may end up without acknowledgment, meaning that the data frame was not delivered successfully. In such situation, the potential relays start opportunistic relay selection process, after detecting a missing acknowledge to an overheard data frame. As a consequence, the first relay to gain access to the wireless medium (the one with best selection factor - c.f. section 2.1) will resend the overheard data frame to the destination. In Fig. 4, Relay2 activates the opportunistic relay selection, as a result it retransmits the data frame.

In what concerns the execution of the three components described in section 1.1 and mentioned in the description of the generic functionality of RelaySpot, Fig. 5, fig. 6 and Fig. 7 provide a description of the sequence of operations respectively related to the selection, scheduling and switching mechanisms.

Fig. 5 provides a flowchart describing the opportunistic relay selection operation in general for one flow (RelaySpot starts parallel processes to handle each active flow).This opportunistic relay selection is performed in the relay node. The relay performs some background computation to estimate how good it is to help an active flow, namely by computing its cooperation factor (c.f. section 2.1.1). In the presence of an active flow, it starts preparation for relay selection by checking its eligibility based on the cooperation factor (previously computed value in background).

After overhearing the RTS/CTS exchange related to an active flow, the potential relay starts operating in a proactive mode, if *need for relaying* is indicated within CTS frame, i.e. the relay need control message. As mentioned above, the destination estimates the quality as indicated e.g. by the data rate of the direct link, i.e. the source-destination link, and includes this information in the CTS message. According to one embodiment this information is only included in the CTS message if the quality or data rate is below a certain threshold to then indicate that there is the need for an improvement by a relay. The potential relay then calculates the cooperation factor based on the destination-relay node link and the source-relay node link, for example using the overheard RTS/CTS exchange between the source and the destination. The cooperation factor indicates the quality and/or data rate between the source and the destination via the potential relay. According to one embodiment the cooperation factor indicates whether the transmission via the relay is better or faster than via the direct link.

In proactive mode, if the relay is eligible to improve the performance of the active flow (i.e., cooperation factor better than direct link), it starts the Contention Window (CW) based on the computed selection factor, in order to become a relay. Calculation of the selection factor will be explained in more detail in section 2.1.1 below. After the expiration of the CW, and if ACK is not overheard for that flow, the relay performs relaying action by sending a Qualification Message (QM) to the destination as shown in Fig. 3 (for an active link). The QM indicates the quality and/or the data rate of the source-relay node link. Presence of an ACK indicates that the destination no more proceeds with the relay process, so in this case the QM is not transmitted. In contrast, if the destination does proceed with the relay process, it starts a reception window after transmitting the relay need control message, in order to give potential relay nodes time to send a QM.

The destination then may receive QMs sent during the reception window and may evaluate the degree of qualification which is based on the information included therein to then decide based thereon which relay should be selected. This information is then transmitted to the source, preferably embedded in an ACK message, which then transmits the next frame via the relay.

The relaying action is different for reactive relaying (broken link). In this case, after overhearing a CTS frame with no indication for relaying, the potential relay does not overhear the acknowledgement of a previously overheard data frame. In this case, the potential relay sends the overheard data to the destination (instead of QM) if it satisfies some relaying conditions, and it does not overhear another retransmission after the expiration of the CW. These different situations will be explained in sections 2.2 and 3 later. Fig. 5 also shows that opportunistic relay selection is activated due to lack of ACK in case of reactive mode.

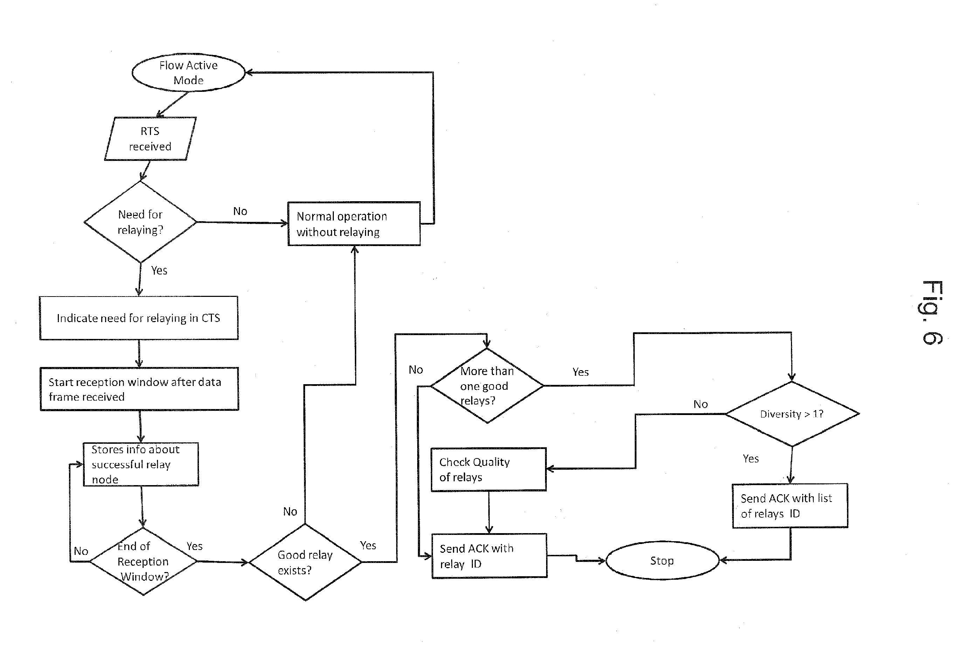

The role of the relaying scheduler at the destination is to select the best relay among opportunistic relays based on received QMs. Fig. 6 illustrates the scheduling operation, which starts a parallel scheduling process for each active flow, if there is the need for relaying. For each active flow the destination checks the need for relaying the flow if the quality of the direct transmission is below a preconfigured threshold. If there is a need for relaying, this information is communicated in the CTS, allowing potential relays to pay attention to this specific flow. After this the destination starts a reception window as soon as the data frame is received in order to collect the QMs from potential relays. At the end of the reception window, the destination sends an acknowledgment message to the source with the identification of the relay or relays (if diversity is configured to a value higher than 1) selected to help this flow, if there are one or more relays that can improve the quality of the direct link.

If there is no need to relaying, the destination enters in a normal procedure without relaying, although the data frames that it can get would be relayed by a relay operating in reactive mode, and not directly from the source. In this case the acknowledgement is sent to the source, as in a normal 802.11 procedure.

Switching between relays, as described in section 1.1, is performed when there is a potential relay that can improve the quality of the source - destination communication to a value higher than the one provided by the current relay. This situation can occur as a consequence of a bad estimation of the best relay by scheduler, or when a new relay comes to the vicinity of the source - destination link.

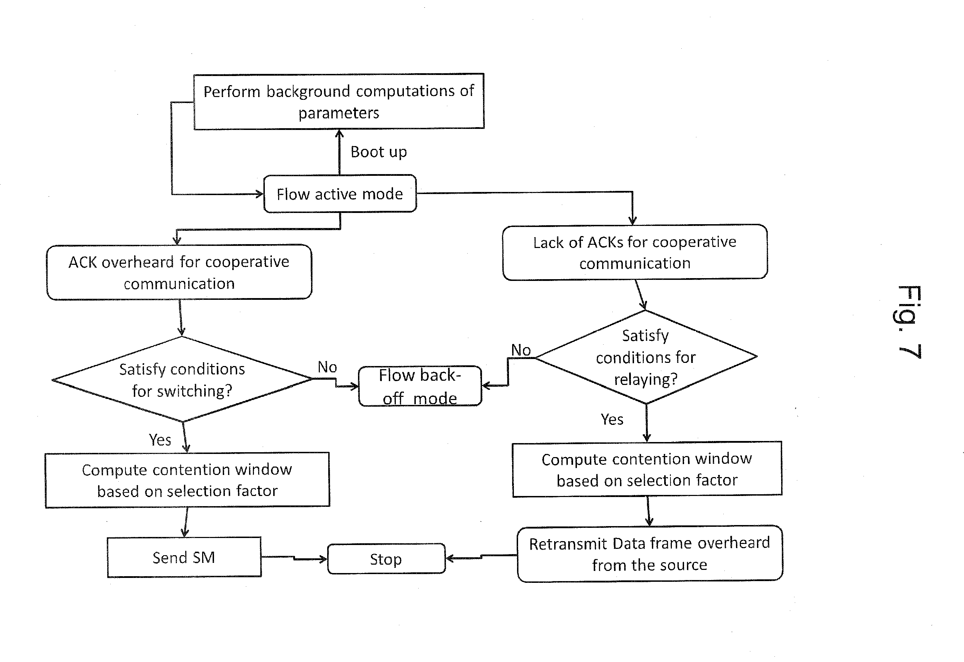

As shown in Fig. 7, after overhearing the acknowledgement sent by the destination to a relayed communication, a potential relay checks if it satisfies the conditions for relay switching: as explained in section 2.1.3, this happens if it has a cooperation factor higher than the current relay. If so, the potential relay sends a Switching Message (SM) to the destination after the expiration of its contention windows (this message is overheard by the source).

Relay switching is also used to keep data being relayed in the presence of a failed relay. If a potential relay detects that the cooperative transmission via a relay failed, that node tries to retransmit the failed data frame, leading to relay switching (implicitly). This will be explained further in section 2.1.3.

## 1.3 RelaySpot Frames

In a normal 802.11 procedure, after associating with an access point (AP), nodes start by sending RTS-CTS frames to gain access to the shared medium and all nodes listen for control and data frames sent out by others on the shared channel: the overhearing process is required by 802.11 b's DCF mechanism as all nodes in the network needs to correctly update their network allocation vector (NAV).

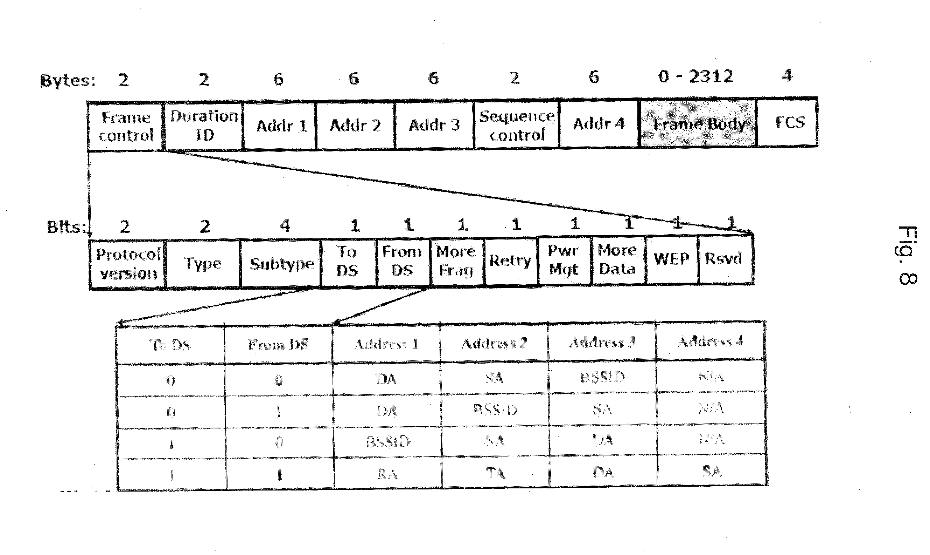

In RelaySpot, potential relays are self-elected based on the state of data transmission from nodes to AP (destination). In the remaining of this section, we explain the way RTS, CTS, DATA and ACK frames are used by RelaySpot in a way compatible with the 802.11 standards in order to avoid disrupting the operation of non-RelaySpot nodes. To ensure standard compatibility, the generic 802.11 frame structure considered by RelaySpot is as illustrated in Fig. 8:

In Fig. 8 the type of addresses (SA; DA; RA; TA) have the following meaning:

- DA - Destination address: As in Ethernet, the destination address is the 48-bit IEEE MAC identifier that corresponds to the final recipient: the station that will hand the frame to higher protocol layers for processing.

- SA - Source address: This is the 48-bit IEEE MAC identifier that identifies the source of the transmission. Only one station can be the source of a frame, so the Individual/Group bit is always 0 to indicate an individual station.

- RA - Receiver address: This is a 48-bit IEEE MAC identifier that indicates which wireless station should process the frame. If it is a wireless station, the receiver address is the destination address.

- TA - Transmitter address: This is a 48-bit IEEE MAC address to identify the wireless interface that transmitted the frame onto the wireless medium. The transmitter address is used only in wireless bridging.

In RelaySpot the ToDS and FromDS bits in the Frame control are used as indicated in the Table 1:

*Table 1: Interpretation of Frames in a Distribution System*

|  | ToDS | FromDS |
|---|---|---|
| Control Frames | 0 | 0 |
| Data Frames from Stations | 1 | 0 |
| Data frames on a "wireless Bridge" including a Relay | 1 | 1 |

During the operation of RelaySpot nodes may need to inform other devices about the rate of received data. To exchange this information bits 11-13 in the Frame Control field are used to code the data rate of the used transmission link. Table 2 illustrates the codes used by RelaySpot to identify the data rate in 802.11b nodes (the number of codes is enough to identify the data rates in 802.11g and 802.11 n). The usage of these bits does not jeopardize the operation of non-RelaySpot nodes since we are only using control bits that are not used within control frames.

*Table 2: Control frame bits to code the rate information*

| Bit 11 | Bit 12 | Bit 13 | Code |
|---|---|---|---|
| 0 | 0 | 0 | No rate information |
| 0 | 0 | 1 | Link is 1Mb |
| 0 | 1 | 0 | Link is 2Mb |
| 0 | 1 | 1 | Link is 5.5Mb |
| 1 | 0 | 0 | Link is 11Mb |

### 1.3.1 RTS frame

The usage of RTS frames is different during the cooperative transmission phase and when reacting to failed transmissions. In each of these cases the RTS frame is used as follows:

- For cooperative transmissions: Duration field is set to accommodate two transmissions (source-relay and relay-destination), while address 4 accommodates the relay address. More-frag bit is set to 0 indicating cooperation phase.

- Reaction to failed transmissions (or implicit switching): Address 4 is set with the source address, and the More-frag bit is set to 1 indicating the retransmission of failed transmission from the specified source.

### 1.3.2 CTS frame

Since RelaySpot is triggered by relays, these need to gather as much information as possible about the surrounding transmissions in order to detect the ones that can be helped. There are two types of transmissions that will be helped: i) the failed ones, detected by detecting missing ACKs; ii) the transmissions with low data rate.

CTS frames allow overhearing stations to get information about the quality and/or the data rate of the direct link. To gather this information Bits 11-13 in the CTS control frame will be used to code information about the data rate of the direct link, as illustrated in Table 2. The potential relays compute the data rates of source-relay and relay-destination channels by overhearing RTS and CTS.

### 1.3.3 ACK Frame

RelaySpot uses the "address 4" field in the ACK frame (marked as unused by the standard) to allow the destination to inform the source about the address of the node that will act as relay for the following data frames. If address4 is not used then the source will follow normal direct transmission. While, bits 11-13 will indicate the data rate of relay-destination channel, according to Table 1, as source needs it to reserve the channel.

If the ACK indicates the reception of failed data via a relay, the destination sets the More-frag bit to 1.

### 1.3.4 DATA Frame

DATA Frames can be send on the direct link, prior to relay selection, or over the relay node, after relay selection.

Data frames sent over the direct link have a ToDS/FromDS code of (1:0). In this case the address code is defined as follows: Address2 indicates the source address; Address 3 the destination address.

Relayed data frames have a ToDS/FromDS code of (1;1) and can be sent over the source-relay link and over the relay-destination link. In each of these two cases the address code is defined as follows:

- Over source-relay link: Address1 indicates the relay address; Address 2 the source address; Address 3 the destination address.

- Over relay - destination link: Address2 indicates the relay address; Address 3 the destination address; Address 4 the source address.

In the case of relayed frames, the relay sends the rate information about source-relay channel in bits 11-13 of the frame control according to Table 1.

### 1.3.5 Qualification Message (QM)

If a node is able to elect itself as a potential relay, the self-elected relay uses a frame of 112 bits (of type CTS) to inform the destination about its willingness to operate as relay for that source-destination transmission. The QM contains information about the rate of the source-relay channel encoded in bits 11-13 of the frame control according to Table 6.1. Note that the destination needs to know rate values to identify the most suitable relay. Since the destination already knows relay-destination channel, it only needs information about source-relay channel to estimate the cooperation factor (explained later) of a specific relay.

### 1.3.6 Switching Message (SM)

If a node is able successful decode a relayed data frame - ToDS/FromDS bits set to (1,1) - sent by a relay, it can elect itself as a potential replacement of that relay if: i) detect missing ACK from the destination; ii) detects that its source-relay and relay-destination links provide better data rates than the current source-relay-destination path.

The node self-elected to replace the current relay uses an empty data frame to inform the destination about its willingness to relay data frames related to that source-destination transmission. This data frame has ToDS/FromDS bits set to (1:1) where address 2 indicates the relay address, address 3 the destination address, and address 4 the source address. Moreover the relay sends its cooperation factor (the rate information about source-relay and relay-destination channels) in bits 11-13 of the frame control. The more-frag bit in frame control is set to 1 to indicate that it is cooperation switching frame.

In summary, the RelaySpot framework achieves the following advantages:

- Does not require maintenance of CSI tables, avoiding periodic updates and consequent broadcasts. Reduces dependency over CSI.

- Avoids overhead of additional control messages.

- Provides a fair balance between relay selection and additional resource blockage.

- Makes use of multiple relays in parallel or in sequence base on quality of received frames.

- Supports relay switching to avoid deterioration of the conditions of relay's channel.

- Support reaction to relay failures (implicit switching).

- Supports multiple diversities based on channel conditions.

- Support proactive and reactive types of relaying.

Table 3 lists the features of RelaySpot framework.

*Table 3: RelaySpot features.*

| Features | | Proactive | Reactive | ExplicitSwitching | ImplicitSwitching |
|---|---|---|---|---|---|
| Architecture | | Ad-hoc/ Infrastructure | Ad-hoc/ Infrastructure | Ad-hoc/ Infrastucture | Ad-hoc/ Infrastructure |
| Implementation | | modification to frame format | modification to frame format | modification to frame format | modification to frame format |
| Operation mode | | RTS/CTS | RTS/CTS | RTS/CTS | RTS/CTS |
| Cooperation | Initiation | Destination | Relay | Relay | Relay |
| | Initiation condition | Poorrate | Link break (S/D) | Poor link (S/D/R) | Link break (S/D/R) |
| | Initiation notification | Implicity in CTS | --- | --- | --- |
| Relay | Selection-basedon | Destination | Relay | Relay | Relay/destination |
| | Eligibility condition | Rate maximum | Rate maximum | Rate maximum | Rate maximum |
| | Relay selection metric | interference, mobility | Interference, mobolity | Interference, mobility | Interference, mobility |
| | Selection notification | Implicity in ACK | --- | --- | Implicitly in ACK |
| | Relay | Single | Single | Single | Single |

## 2 Details

This section provides further details about RelaySpot. We start by providing information about the main building blocks of RelaySpot: opportunistic relay selection, cooperative relay scheduling and relay switching. Second, we explain in detail the operation of RelaySpot in a source, potential relay and in a destination node.

## 2.1 Components

In the following we describe the operation of the three components of RelaySpot.

### 2.1.1 Relay Selection

Relay selection is a challenging task, since it greatly affects the design and performance of a cooperative network. However, relay selection may introduce extra overhead (e.g., CSI estimation) and may never be able to find the best relay in dynamic scenarios. Hence, the major goal of RelaySpot is to minimize overhead introduced by cooperation, with no performance degradation, by defining an opportunistic relay selection process able to take advantage of the most suitable self-elected relay.

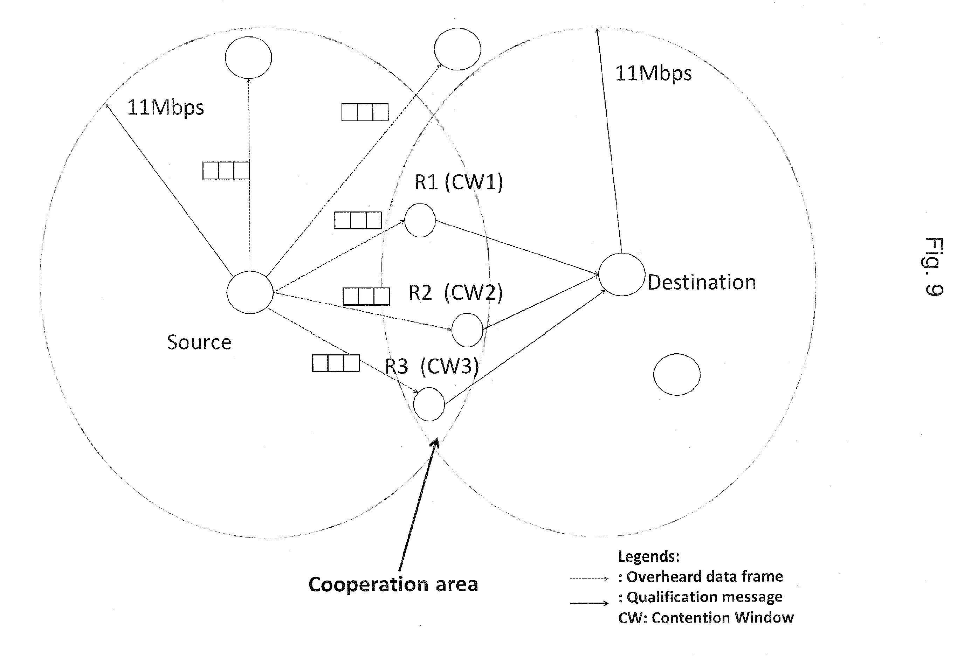

This section describes the functionality proposed to allow self-elected relays to avoid high interference and to guarantee high data rates to a destination while preventing waste of network resources. Relay selection is performed in three steps: First, each node checks if it is eligible to be a relay by verifying two conditions, overheard a good frame sent by the source and being positioned within the so called cooperation area, both conditions being reflected in a cooperation factor; Second, eligible nodes starts the self-election process by computing their selection factor, which is aware of their interference, history and mobility; Third, self-elected relays set their Contention Window (CW) based on their selection factor, and send a qualification message towards the destination after the contention window expires, as shown in Fig. 9.

Only nodes that are able to successfully decode frames sent by a source can execute the relay selection process. These relays start by verifying if they are inside the cooperation area by computing their Cooperation Factor (CF) as given in Equation 1, where Rsr is the rate of source-relay channel, while Rrd is the relay-destination channel rate. The rate of the source-relay and relay-destination channel is computed by overhearing RTS and CTS frames exchanged between source and destination. The CF ensures that potential relays are closely bounded with the source while having good channel towards the destination: an eligible relay must have a CF that ensures a higher data rate than over the direct link from source to destination. According to one embodiment the CF may be calculated as follows:

$$CF = (Rsr * Rrd) / ((Rsr + Rrd) * Rsd) \; ; \; CF \in [0; \infty[ \qquad (1)$$

Or in circumstances where Rsd is not available using:

$$CF = (Rsr * Rrd) / (Rsr + Rrd) \; ; \; CF \in [0; \infty[ \qquad (2)$$

If the cooperation factor is larger than 1 this means that the rate via the relay is higher than the rate via the direct link (Rsd) which means that the relay node considers itself "qualified" or "eligible" and will send a qualification message during the reception window opened by the destination.

CF is the basic condition for relay selection. If a node does not satisfy CF it cannot be a relay. In essence the CF ensures that the potential relays are nodes in a good position in relation to the source and the destination. Similarly in case of switching, a relay checks the CF of itself with CF of selected relay.

Moreover, the qualification of a node as a relay (that it is able to decode the source frame and is within the cooperation area) depends upon local information related to interference (node degree, i.e. number of neighbours, plus load), mobility and history of successful transmissions towards the specified destination.

Node degree, estimated by overhearing the shared wireless medium, gives an indication about the probability of having successful relay transmissions: having information about the number of neighbours allows the minimization of collision and blockage of resources. However, it is possible that nodes with low degree are overloaded due to: i) local processing demands of applications or ii) concurrent transmissions among neighbour nodes. Therefore, RelaySpot estimates the interference level that a potential relay is subjected to as a function of node degree and load. By using the interference level together with the history and mobility factors, the relay computes its selection factor (SF).

In an alternative, only interference (node degree) may be used as selection factor.

If self-elected to operate as a relay based on the cooperation factor, the node computes its contention window based on the selection factor. The goal is to increase the probability of successful transmissions from relays to the destination by giving more priority to relays that are more closely bounded to the destination, have less interference, and have higher pause times. Thus, the selection factor is a way of giving preference to a relay while sending a message to destination.

To send a qualification message (QM) or switching message (SM) there is contention among potential relays. The contention window of a potential relay is influenced by its selection factor, which allows the nodes with better conditions based on predefined local parameters to have higher probability to become a relay. The choice of such parameters according to oembodiments of the invention may depend on network and implementations.

### 2.1.2 Relay Scheduling

The opportunistic relay selection mechanism may lead to the qualification of more than one relay, each one with different values of the selection factor, depending on current conditions. Selected relays will forward data towards the destination based on a cooperative relay scheduling mechanism.

This section describes the functionality proposed to allow self-elected relays to avoid high interference and to guarantee high data rates to a destination while preventing waste of network resources: the contention window plays an important role in scheduling relay opportunities.

Based on the CF (i.e., Rsr and Rrd) of the qualification messages received from all self-elected relays, the destination estimates which of the involved relays are more suitable to help in further transmissions. To get multiple qualification messages the destination only processes the received qualification messages after a predefined time window, i.e., Reception Window (RW). As shown Fig. 10, the size of the reception windows is of major importance, since it will have an impact on the number of qualification messages that will be considered by the destination.

After the expiration of the reception windows the destination processes all the received qualification messages based on their received signal strength (Rrd) and Rsr (Rsr is carried by QM). Depending on the configured diversity level the destination will select one or more relays to help the current transmission. If diversity is set to one, the destination sends an ACK frame to the source including the ID (i.e., MAC address) of the selected relay, which can continue sending the frames to the destination.

RelaySpot solution (in proactive mode) is destination based, because the destination is choosing the best set of relays via scheduler.

### 2.1.3 Relay Switching

Since relays are selected opportunistically, based on local information, there is the possibility that the best relay is not able to compute a small contention window, losing the opportunity to become a relay. In order to overcome this situation, as well as to support the failure of selected relays, RelaySpot includes a relay switching operation.

All potential relays are able to compute their own CF, as well as the CF of the selected relay. The former is possible by overhear the ongoing RTS/CTS, which are used to compute the cooperation factor from the signal quality. The CF of the currently selected relay can be computed based on its source-relay and relay-destination data rate, which any other potential relay can collect by overhearing data and ACK frames.

If a potential relay is not selected in the relay selection procedure, it compares its cooperation factor with the cooperation factor of the selected relay. If its cooperation factor is better, which means that it can provide better gain, it sends a Switching Message (SM) by sending a dummy data frame to the destination informing it about its own cooperation factor. This way the previously selected relay can be switched to the newly selected relay, since: i) by overhearing the frame sent by the new relay, the source will send the next data frame towards that relay: ii) by receiving the frame sent by the new relay, the destination knows that the next data frame will be sent by it.

Relay switching is very suitable for dynamic scenarios where a previously selected relay may not be efficient at some stage, due to mobility, fading, or obstacles, for instance. Hence, unlike prior-art, relay switching can overcome such variations in network conditions making the deployment of cooperative relaying possible for dynamic networks.

While the use of the "Switching Message" can be used to improve the performance of a communication, by replacing a good relayed transmission by a better one, relays can be switched implicitly when a potential relay detects a missing ACK for an already relayed communication. In this situation the relays try to forward the overheard data frame on relay that failed the transmission. If successful, the destination will notify the source about the MAC ID of the new relay using an ACK frame.

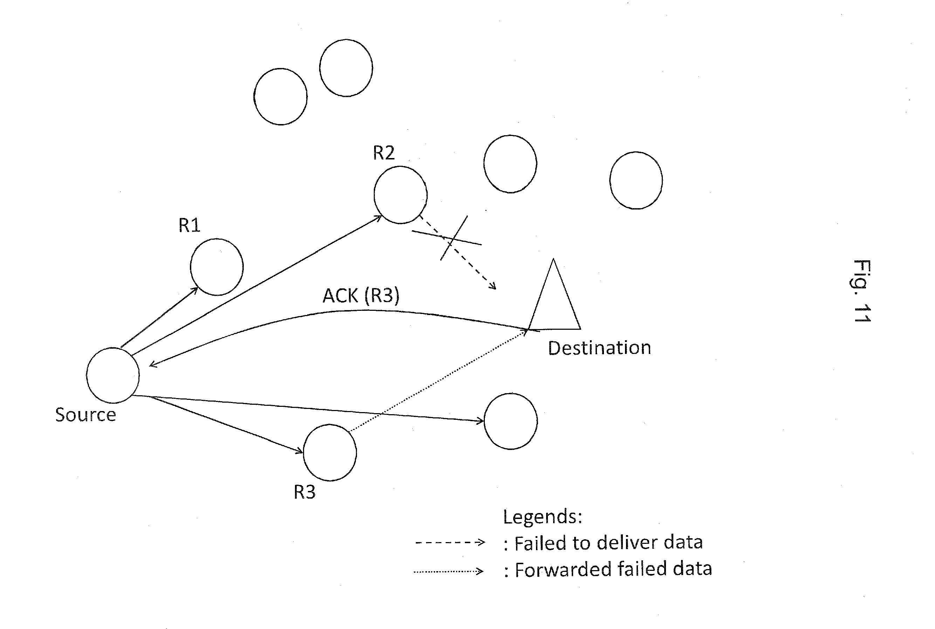

Fig. 11 shows an example of implicit relay switching, where a previously selected relay, R2, fails to relay data to destination. In this case, instead of retransmitting the failed data and re-selecting the relays, another potential relay (in this case R3) that has better cooperation factor than R2 reserves the channel for sending the failed data frame to destination. If it is successful, the destination sends ACK with indication of R3 as relay, and the source switches from R2 to R3 for the next data frame.

### 2.2 Operation

In this sub-section we describe the state diagrams and flow charts of the three types of nodes involved in the operation of RelaySpot: source, relay and destination nodes. The relaying operation has two phases, first the relay is selected (relay selection phase) and then cooperative communication via selected relay starts (cooperation phase). The relay selection always takes place on relay node, while the cooperation phase always started by having the source node sending data to the destination via the selected relay. However, in case of reaction to failed transmissions, the cooperative communication is started by the relay by sending failed data on behalf of source.

### 2.2.1 Source Node Operation

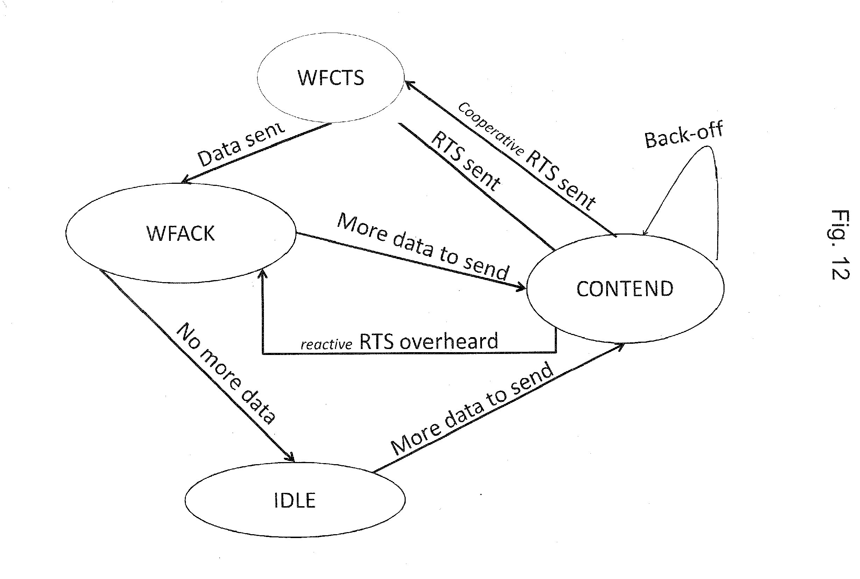

Fig. 12 shows the state diagram at source node. All the illustrated states are already used for an operation already described in the 802.11 standard, which means that RelaySpot does not impose any fundamental change in the standard, since there is no new state required at source node. On a level of a state diagram the only changes required by RelaySpot are two new state switching conditions, represented by green lines in Fig. 12.

In normal 802.11 operations (without cooperation) the source sends an RTS (in CONTEND state) and switches to the WFCTS state where it stays until CTS is received. After this event the source sends a Data frame and switches to Wait For ACK (WFACK) state until an ACK is received. If the source has more data to send it switches back to the CONTEND state.

If the source is configured to operate in RelaySpot mode, while in CONTEND state the source sends an RTS and switches to WFCTS state (if a relay is already selected for this flow, means that the data should be transmitted via a relay, therefore, this RTS should be a cooperative RTS frame as described in section 1.3.1). After source receives *cooperative* CTS in the WFCTS state, it switches to the WFACK state after sending a data frame to the relay. While in this state the source overhears data forwarded by relay to destination, but it remains in the same state. In a situation when the source did not receive ACK, it tries to retransmit failed data by switching to CONTEND state. But if the source overhears that a potential relay is retransmitting the failed data frame on his behalf, the source switches back to WFACK state when the reactive RTS sent by another relay is overheard.

*Cooperative RTS*/CTS/ACK are not any new kind of frames; rather this terminology is just an indication of operation in the cooperation phase. Similarly, *reactive RTS*/CTS/ACK are just an indication of operation within reactive mode, during a failed data is forwarded by a relay.

The state diagram is further explained with the help of supporting the flowcharts given below, which describe the operation of a source within the WFACK, CONTEND, and WFCTS states. The flowcharts show the normal 802.11 process in blue and the new RelaySpot additional operations in green.

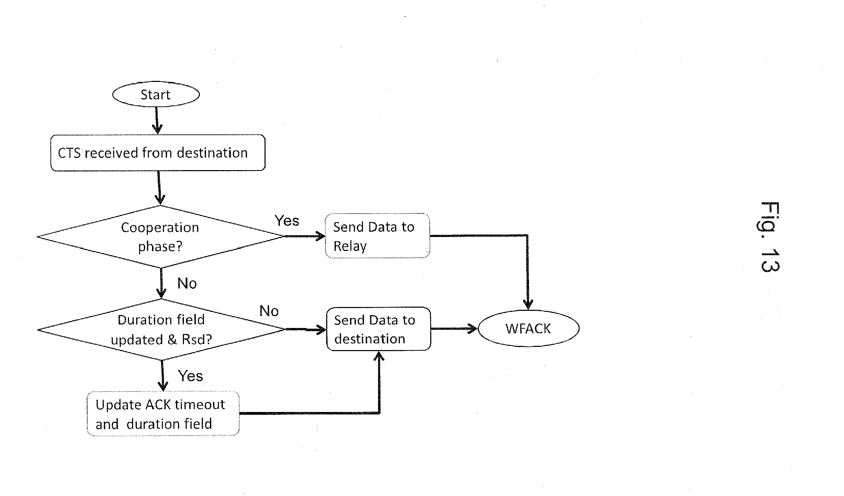

Fig. 13 describes the operations within the WFACK state. If the source does not receive ACK, it will switch to CONTEND state to retransmit data. If the received ACK is a reactive ACK (more-frag=1, as a result of failed data forwarded by another relay), then the source discards the retransmission. In any case, the source checks the address4 and Rrd within ACK frame: if these exist, the next data transfer will be via relay (cooperation phase), otherwise data will be sent by using the normal 802.11 operation. If there is a frame to send, the source switches to CONTEND state.

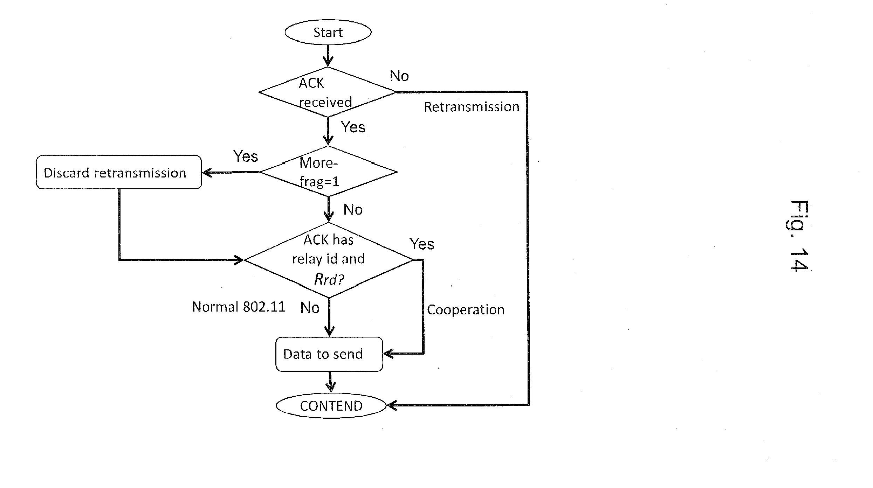

To send a frame a source needs to reserve the channel by sending an RTS, as in a normal 802.11 operation. In case of cooperation phase the source sets the duration field to accommodate source-relay and relay-destination data transfer according to data rates *Rsr and Rrd* to reserve channel for cooperative transmission, as shown in Fig. 14. If in meanwhile the source overheard an SM, it sets the cooperative RTS according to new relay id and *Rrd.*

If the source is trying to retransmit a frame, it will switch to the WFACK state if it overhears a reactive RTS with its ID in the "address4" field. Otherwise the source will continue normal 802.11 operations by sending an RTS.

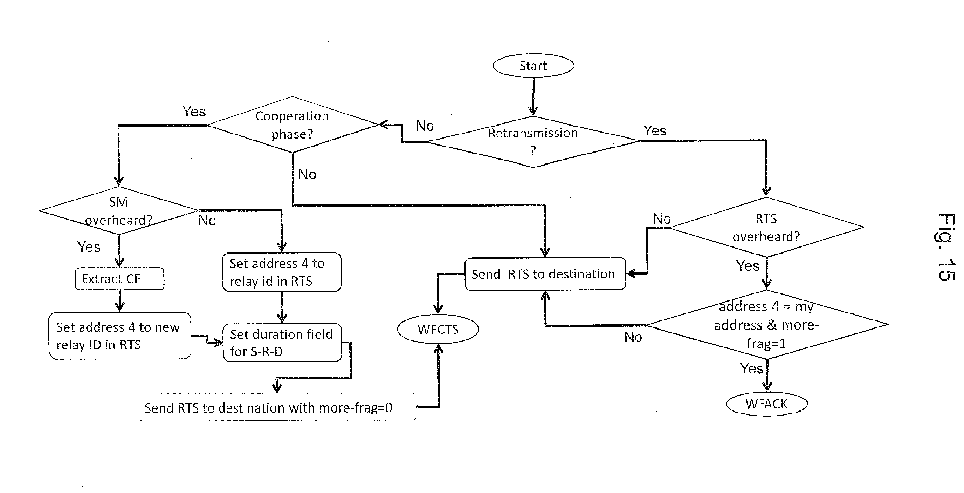

Fig. 15 describes the flowchart of the WFCTS state. When in a cooperation phase, the source sends data frame to relay (instead of destination as occur in normal operation) after receiving a CTS from the destination. In case of direct normal transmission, the source checks if the received CTS include the *Rsd* and the duration field is updated. If so, the source updates the ACK timeout and its duration field to reflect the duration field in the CTS frame, in order to be synchronised with the destination (to allow potential relays to transmit qualification messages towards the destination). This corresponds to relay selection phase at source node. The source sends the data frame and switches to WFACK.

## 2.2.2 Destination Node Operation

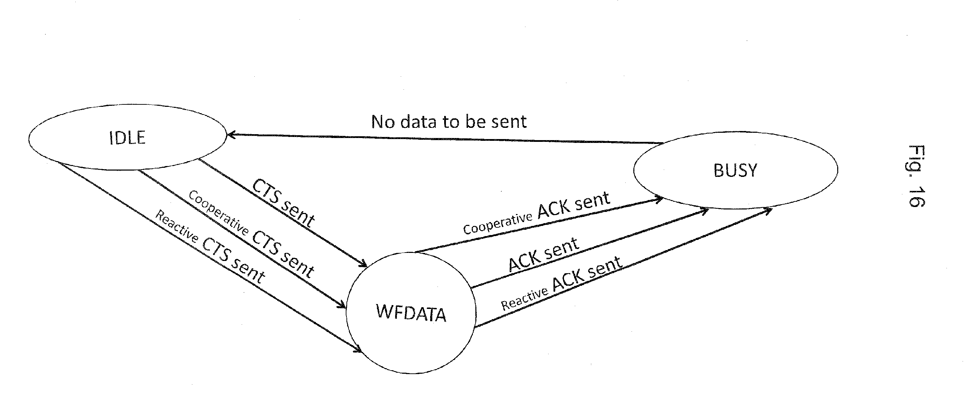

Fig. 16 shows the state diagram at destination node. As in the case of the source node, RelaySpot does not require any change to the normal 802.11 operation on the destination. In a normal 802.11 operation, if the destination receives an RTS within IDLE state, it sends CTS to source and switches to the Wait For DATA (WFDATA) state. After reception of data the destination sends an ACK to the source and switches to BUSY state to check if it has its own data to send, after which the destination returns to the IDLE state (because a node configured as destination has no data to send).

While in the IDLE state, if the destination verifies the need for relaying, the destination indicates this situation within CTS (as described in section 1.3.2) and switches to the WFDATA state. In the WFDATA state the destination sets the RW after the reception of the data frame. When RW expires, the destination sends ACK (with or without relay indication) and switches to BUSY state, and then to IDLE.

While in the IDLE state, if the received RTS indicates cooperation phase, the destination sends cooperative CTS, and waits for data to be arrived from relay. During WFDATA state, the destination also overhears data frame for source-relay link, but it stays in WFDATA. After arrival of data, it sends cooperative ACK to source.

While in the IDLE state, if the received RTS indicate reactive mode, the destination sends reactive CTS, and waits for data to be arrived from relay. After arrival of data, it sends reactive ACK to source.

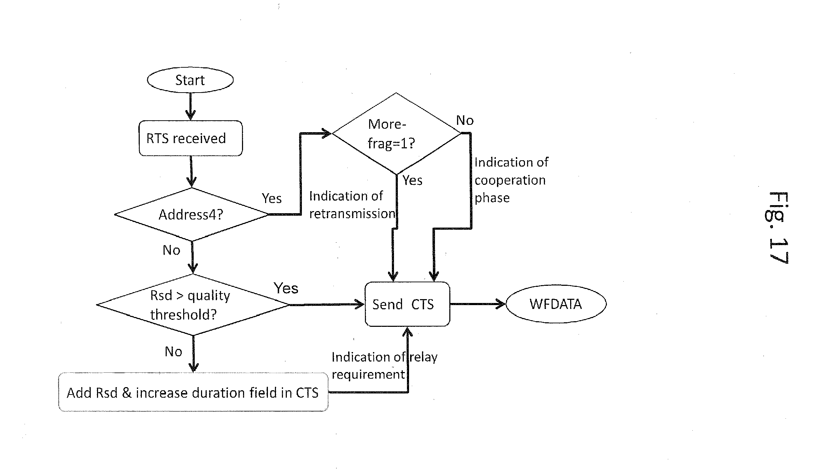

Fig. 17 shows the flowchart for the IDLE state. When an RTS is received, the destination ends up always sending CTS to the source and switching to the WFDATA state. In case of a normal RTS (address4 field is empty), the destination checks the data rate of the source-destination link and verifies if relaying is required by checking if the data rate of the direct link is below a configured threshold. If the performance of the direct link does not need to be improved, the destination sends CTS as in the normal 802.11 operation. However, if the direct link can be improved by relaying, the destination sends a CTS frame piggybacking the Rsd rate and increases the duration field in the frame by the RW size. This means that the scheduler is triggered, which allows the relays to send QM after overhearing data frame.

If the destination receives an RTS frame with an indication on the address4 field that means that a relay is being used. In this case the destination check the more-frag bit to check if this is a cooperative or reactive RTS.

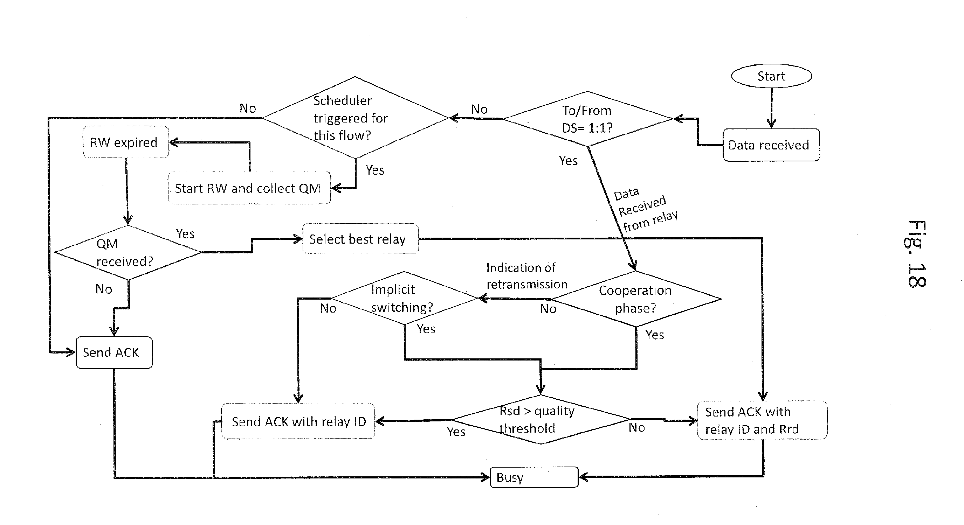

Fig. 18 shows the destination operation at the WFDATA state. In a normal 802.11 operation, the destination gets a data frame directly from the source (To/FromDS=1:0), does not trigger the scheduler and send an ACK back to the source. However, if the data frame collected from the source requires relaying, the destination starts the RW timer (if scheduler was triggered for this flow). Before the expiration of the RW, the destination collects any qualification message that is addressed to it. After the expiration of the RW, the destination chooses the best relay based on the CF, and sends an ACK frame with the MAC ID of the selected relay and Rrd. This information is used by the source to perform channel reservation.

When the destination gets a data frame from a relay and is operating in the cooperation phase, it sends ACK to source with the relay ID and Rrd. However, if the quality of direct link has been improved, and there is no need of cooperation, the destination sends ACK without Rrd to implicitly inform the source that the cooperative phase should be stopped.

In case the received data frame is forwarded by relay for a broken direct link (reactive phase), the destination sends ACK to source, including the relay ID. (*In this case the source will not enter to cooperation phase for the following frames rather direct transmission will take place.)*

In case the received data frame is forwarded by relay for a broken relayed link (i.e., relay failure during cooperation phase), the destination first check if cooperation phase needs to be continue or not (as it check for normal cooperation phase). The destination sends ACK to source with relay ID, with or without R*rd* accordingly.

### 2.2.3 Relay Node Operation

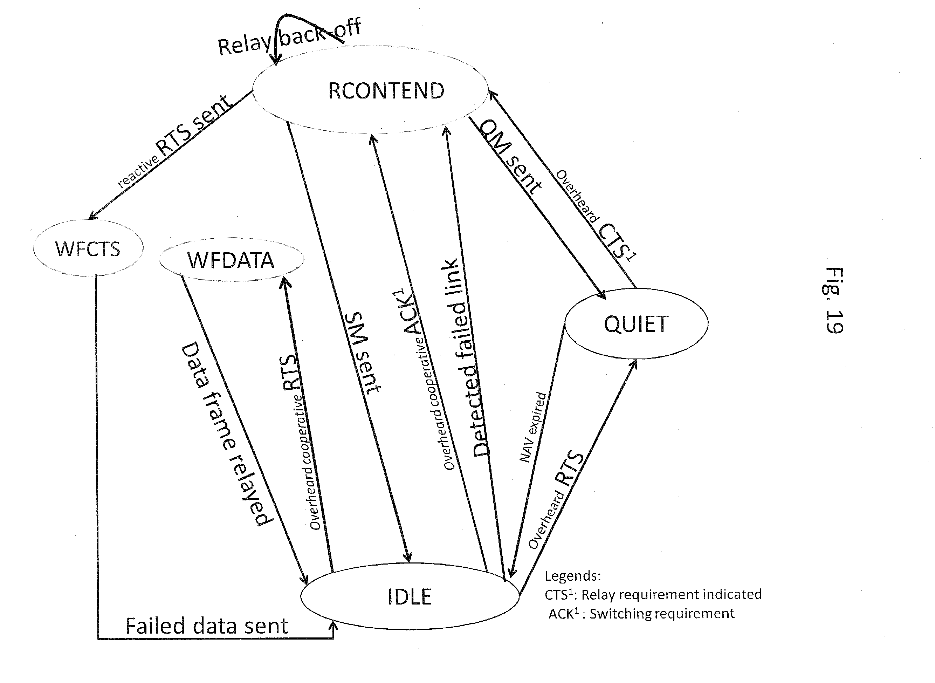

Fig. 19 shows the state diagram at relay node. In relation to the normal 802.11 the operation of a relay needs the implementation of three new states. In a normal 802.11 operation, when a node overhears a transmission which is not intended for it, it switches to QUIET state; it will remain in QUIET state until the expiration of NAV. If the NAV expires it goes back to the IDLE (its original) state.

During cooperation phase (where the relay is already selected by the destination), the relay switches from IDLE state to the WFDATA state after overhearing cooperative RTS directed to it. After receiving data frame from source, it sends back the frame to destination *(i.e., do not send frame to upper layers)*, and switches back to the IDLE (original) state.

There are three situations when the relay switches to RCONTEND state: i) when switching is required, ii) when failed link is detected and iii) when the relay selection is required.

While in the RCONTEND state, the potential relay computes its contention window based on selection factor. When the contention window expires, the relay sends QM, SM or reactive RTS to the destination. In case of QM and SM, relay switch back to its original state. In short, the relay switches to RCONTEND state when it needs to contend for the medium.

In a case when switching is required, the relay switches to RCONTEND state, sends SM, and after that switches back to its original state (IDLE). In case a relay detects a failed transmission, it switches to RCONTEND state to send the data frame on behalf of source. Upon expiration of CW, it sends RTS to destination with more-frag bit set to 1 and address4 set with the source address (reactive RTS). Upon reception of CTS the data is forwarded to destination and the relay switches back to its original (IDLE) state. Such retransmission can also occur when the relay fails during cooperation phase.

With RelaySpot, any potential relay has a background process to periodically update its selection factor. When a potential relay overhears a transmission (of RTS), it switches to QUIET state; it will remain in QUIET state until the expiration of NAV. However, if the potential relay overhears a CTS frame with Rsd while in the QUIET state, it starts by checking if it is eligible for relaying. The verification is done by computing the CF based on the Rsr and Rrd values estimated by the strength of RTS and CTS respectively, and comparing it with the Rsd that is extracted from the CTS frame. If the relay is eligible, then after overhearing a data frame from a link that needs help, it switches to RCONTEND state, as shown in Fig. 20.

Fig. 21 explains the IDLE state at relay. If the relay detects a failed link - missing ACK (reactive mode), it try to retransmit the failed data on behalf of source. Therefore, it will switch to RCONTEND state.

If an ACK is overheard for cooperative transmission via other relay, the relay computes the CF of the selected relay and if it has better CF than the selected relay, it switches to the RCONTEND state aiming to become the new relay.

While, the cooperation phase at relay starts by overhearing cooperative RTS from source with the relay MAC address included in address4 field. In this case the relay switches to WFDATA state if the more-frag bit is set to zero meaning that the selected relay will forward the data received from source; otherwise the relay will switch to QUIET state as explained in the state diagram.

## 3 Operational Illustration

This section provides the operational examples with few scenarios as shown in the followings.

### 3.1 Improvement of Direct Transmission

Fig. 22 illustrates the RelaySpot operation in a scenario where we have a poor link between source and destination. If the direct link exists, it means that RelaySpot can work in proactive mode. Within proactive mode, the slow source-destination communication can be improved by replacing the slow direct link by a faster set of relayed links. The decision to initiate cooperation is taken by destination, after realizing the poor link. In 802.11b the poor links means either 1 Mbps or 2 Mbps, which can be helped by relays. If the direct link is 5.5 Mbps, then it cannot be helped, because the condition for cooperation is false (CF >Rsd). The destination implicitly indicates the need for cooperation within CTS frame. Destination also increases the duration within CTS frame by RW amount, to allow relays to send their QM. By overhearing CTS, all nodes update their NAV accordingly.

In this example, first the relay selection takes place. After overhearing data frame from source, relays contend and try to send QMs to the destination. In this example, we assume that destination receives at least one non-colliding QM from a potential relay within RW, and the data frame from source is also received correctly. Hence, destination sends an ACK frame with the indication of the selected relay, after RW expires.

After the relay has been selected, the cooperative transmission takes place. After usual handshake, the data frame is forwarded to the selected relay, which relays the data frame to the destination without contention. The destination confirms the reception of data via relay with an ACK. This cooperative transmission will continue until the last frame, or if the direct link gets better.

### 3.2 Reaction to a failed direct transmission

Here we describe an example in which the direct link fails. It is possible that direct channel may fail due to errors or collisions. In normal 802.11 standard the source tries to retransmit the data frame again until the maximum retry limit. RelaySpot on other hand allows the relay to send data on behalf of source avoiding re-transmission. Fig. 23 shows that when potential relays detect failure of direct data frame (by missing of ACK) they contend and the winner forwards the data frame on behalf of source. The destination sends ACK to source to acknowledge the reception of data.

### 3.3 Relay Switching (Implicit + explicit)

Here we provide examples of the RelaySpot proactive relaying by means of sequence charts. We considered a scenario with three potential relay nodes R1, R2, and R3, and one source-destination pair, as illustrated in Fig. 24. The destination uses CTS frame to piggyback the source-destination data rate, which provides potential relays with an implicit indication about the need of cooperation. The potential relays compute the cooperation factor based on instantaneous rates computed by overhearing RTS/CTS frames. If a relay is able to improve the rate of the direct channel, it sends a qualification message (QM) to the destination by setting its contention window based on the selection factor, computed after overhearing a data frame from the source. After receiving data frame from the source, the destination does not send an ACK immediately. Rather, it starts the RW in order to give opportunity to qualified relays to send QMs. After the RW expires, the destination selects the relay based on the received QM, and confirms the selected relay in an ACK message, which includes the relay-destination data rate (Rrd).

After relay selection and for the next data frames, the source sends an RTS message to the destination to reserve the channel for accommodating source-relay and relay-destination transmissions. After receiving the CTS frame sent by the destination, the source forwards a data frame to the selected relay, which sends the data frame to the destination after SIFS amount of time. After successful reception of the relayed data frame, the destination sends an ACK message to the source

We further explain two cases, selection of non-optimal relay and relay failure case.

### 3.3.1 Non Optimal Relay Selection (Explicit Switching)

Fig. 24 also illustrates a sequence diagram for a proactive behaviour of RelaySpot aiming to improve the communication performance. The selected relay R1 is not the optimal one and there is better relay (R3) available (e.g.

due to variation in channel conditions the CF of selected relay degrades). Therefore, R3 tries to inform the source-destination pair non optimal relay situation by sending a data frame for relay switching. As a consequence the source starts relaying data over R3.

In this example we assume that, due to mobility, R3 becomes a better relay than R1 in order to illustrate the proactive behaviour (in term of explicit switching) of RelaySpot. In this case R3 sets its contention window after overhearing the ACK frame, and sends a SM to the destination carrying its CF. upon overhearing this frame, the source start using R3 as a relay for the next data frames.

### 3.3.2 Relay Failure

Now we assume that R3 fails to relay data at some instant in time to illustrate the reactive behaviour (in term of implicit switching) of RelaySpot. In this case if potential relays detect missing ACKs, they try to retransmit overheard data frames on behalf of R3. In this example, R2 tries to set its CW according to Equation 3. If R2 is successful to forward the failed data frame, the destination sends an ACK frame to the source with R2 id and R2-destination data rate (Rrd), while the source learns about Rsr from overhearing transmissions from R2. The source will then switch to R2 for next data frames. This way implicit relay switching will take place.

Fig. 24 shows a sequence diagram for a reactive behaviour of Relayspot to keep the communication active after the failure of a relay. In this situation other potential relays realize this situation by either overhearing NACK or lake of ACK. Thus, other potential relays contend for channel to forward the overhear frame on behalf of the source.

### Claims

1. A method for enhancing data communication between a source and a destination in a wireless network, wherein a data packet is transmitted from the source to the destination via a relay node, the method being performed in the relay node and comprising the steps of:

   overhearing by said relay node a relay need control message sent from the destination to the source indicating the need for relaying data packets which are to be sent from said source to said destination;
   determining by the relay node its degree of qualification to act as a relay node for relaying data packets;
   transmitting by the relay node a qualification message, QM, to the destination indicating the degree of qualification; and
   receiving, by the relay node, a data packet to be relayed from the source and relaying it to the destination if the relay node was selected by the destination for relaying data packets based on the QM.

2. The method for supporting data communication of the preceding claim, wherein the degree of qualification is based on a quality of the source-relay link, preferably indicated by the data rate between the source and the relay node which preferably is determined by overhearing e.g. the RTS message sent from the source to the destination.

3. The method for supporting data communication of the preceding claim, further comprising:

   determining said degree of qualification based on a quality of the source-relay link, preferably indicated by the data rate between source and relay, and a quality of the destination-relay link, preferably indicated by the data rate between destination and relay, wherein the step of sending a QM is only performed if said degree of qualification indicates that the data rate from the source to the destination via the relay is larger than the data rate of the direct source-destination link.

4. The method for supporting data communication of one of the preceding claims, comnprising one or more of the following
   determining the quality of the source relay link based on overhearing by the relay node the RTS message sent from the source to the destination;
   determining the quality of the destination relay link based on overhearing by the relay node the CTS message sent from the destination to the source;
   sending said qualification message from said relay node to said destination, preferably in form of a RTS message containing an indication of the data rate between the source and the relay;
   determining the relay to be selected by the destination node based on the data rate of the source destination link via said relay compared with the data rate a relay is selected which improves the data rate compared to the present data rate between source and destination;

informing the source about the relay selection by sending the selection information included in an ACK frame sent from the destination to the source.

5. The method for supporting data communication of any of the preceding claims, wherein the QM is transmitted within a contention window which is set by the relay node based on a selection factor which is calculated based on one or more of interference, node degree, history, and load of the relay such that it gives more priority to relays that are more qualified to act as a relay node.

6. The method for supporting data communication of one of the preceding claims, wherein
said relay need control message is a CTS message sent from the destination to the source and contains information about the link quality, preferably indicated by the data rate, between the source and the destination, and wherein if said link quality is below a certain threshold this triggers potential relay nodes to determine their degree of qualification and to send a QM if their degree of qualification indicates a better link quality if they are chosen as a relay.

7. A method for enhancing data communication between a source and a destination in a wireless network, wherein a data packet is transmitted from the source to the destination via a relay node, the method being performed in the destination and comprising the steps of:

receiving by said destination one or more qualification messages, QM, from one or more potential relays indicating the degree of qualification of the respective relay nodes to act as a relay node for relaying data packets; selecting one or more relay nodes for relaying data packets based on the one or more received QMs, and transmitting a selection control message to the source indicating the selected one or more relays.

8. The method for supporting data communication of the preceding claim, further comprising:

determining the quality of the source-destination link; and
transmitting a relay need control message to the source indicating need for relaying, based on the determined link quality.

9. The method for supporting data communication of claims 7 or 8, further comprising:

starting a reception window, during which the one or more QMs are received by the destination.

10. A method for enhancing data communication between a source and a destination in a wireless network, wherein a data packet is transmitted from the source to the destination via a relay node, the method being performed in the source and comprising the steps of:

receiving a selection control message from the destination node indicating the relay which was selected based on a qualification message, QM, received by the destination from the relay node; and
transmitting the data packet to be relayed to the relay node for transmission to the destination.

11. The method for supporting data communication of any of the claims 1 to 6, 8, 9, and 10, wherein the relay need control message indicates a data rate of the source-destination link.

12. A relay node for enhancing data communication between a source and a destination in a wireless network, wherein a data packet is transmitted from the source to the destination via the relay node, the relay node comprising:

means for overhearing a relay need control message sent from the destination to the source indicating the need for relaying data packets which are to be sent from said source to said destination;
means for determining the degree of qualification of the relay node to act as a relay node for relaying data packets;
means for transmitting a qualification message, QM, to the destination indicating the degree of qualification; and
means for receiving the data packet to be relayed from the source by the relay node and relaying it to the destination if the relay node was selected by the destination for relaying data packets based on the QM.

13. A destination node for enhancing data communication between a source and said destination node in a wireless network by receiving a data packet from the source by said destination via a relay node, said destination node comprising:

means for receiving one or more qualification messages, QM, from one or more potential relays indicating the degree of qualification of the respective relay nodes to act as a relay node for relaying data packets;
means for selecting one or more relay nodes for relaying data packets based on the one or more received QMs, and
means for transmitting a selection control message to the source indicating the selected one or more relays.

14. A source node for enhancing data communication between said source node and a destination node in a wireless network by transmitting a data packet from the source to said destination via a relay node, , the source node comprising:

means for receiving a selection control message from the destination node indicating the relay which was selected based on a qualification message, QM, received by the destination from the relay node; and
means for transmitting the data packet to be relayed to the relay node for transmission to the destination.

15. A computer program for when being executed on a comuter enabling said enabling said computer to carry out a method according to one of the preceding method claims or to act as an apparatus according to one of the preceding apparatus claims.

Fig. 1

# Fig. 2

# Fig. 3

Fig. 4

Destination

Relay1

Source

Relay2

Legends:
: Direct frame
: Overheard frame

1: RTS1
2: CTS1
3: DATA1
4: RTS1
5: CTS1
6: DATA1
7: ACK1 (Relay2)

start relay selection

# Fig. 5

# Fig. 6

# Fig. 7

EP 2 844 000 A1

Bytes: 2   2   6   6   6   2   6   0 - 2312   4

| Frame control | Duration ID | Addr 1 | Addr 2 | Addr 3 | Sequence control | Addr 4 | Frame Body | FCS |
|---|---|---|---|---|---|---|---|---|

Bits: 2   2   4   1   1   1   1   1   1   1   1

| Protocol version | Type | Subtype | To DS | From DS | More Frag | Retry | Pwr Mgt | More Data | WEP | Rsvd |
|---|---|---|---|---|---|---|---|---|---|---|

| To DS | From DS | Address 1 | Address 2 | Address 3 | Address 4 |
|---|---|---|---|---|---|
| 0 | 0 | DA | SA | BSSID | N/A |
| 0 | 1 | DA | BSSID | SA | N/A |
| 1 | 0 | BSSID | SA | DA | N/A |
| 1 | 1 | RA | TA | DA | SA |

Fig. 8

Fig. 9

# Fig. 10

## Fig. 11

Fig. 12

Fig. 13

Fig. 14

# Fig. 15

Fig. 16

Fig. 17

- Start
- RTS received
- Address4?
  - Yes → Indication of retransmission → More-frag=1?
    - No → Indication of cooperation phase
    - Yes → Send CTS
  - No → Rsd > quality threshold?
    - Yes → Send CTS
    - No → Add Rsd & increase duration field in CTS → Indication of relay requirement → Send CTS
- Send CTS → WFDATA

Fig. 18

Fig. 19

Legends:
CTS[1]: Relay requirement indicated
ACK[1]: Switching requirement

# Fig. 20

Fig. 21

EP 2 844 000 A1

41

Fig. 22

Fig. 23

Legends:
BO:       Back-Off
RBO:      Relay Back-Off
Data (D): Relay-destination data frame

# Fig. 24

Legends:

CF+: Cooperation Factor is better

CF-: Cooperation Factor is worse

SM-: Switching Message

Europäisches
Patentamt

European
Patent Office

Office européen
des brevets

# EUROPEAN SEARCH REPORT

**Application Number**

EP 13 18 2366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HELMUT ADAM ET AL: "Adaptive relay selection in cooperative wireless networks", PERSONAL, INDOOR AND MOBILE RADIO COMMUNICATIONS, 2008. PIMRC 2008. IEEE 19TH INTERNATIONAL SYMPOSIUM ON, IEEE, PISCATAWAY, NJ, USA, 15 September 2008 (2008-09-15), pages 1-5, XP031371459, ISBN: 978-1-4244-2643-0 * the whole document * | 1-15 | INV. H04W40/22 H04W88/04 |
| X | BLETSAS A ET AL: "A Simple Distributed Method for Relay Selection in Cooperative Diversity Wireless Networks, based on Reciprocity and Channel Measurements", 2005 IEEE 61ST VEHICULAR TECHNOLOGY CONFERENCE. VTC2005- SPRING - 30 MAY-1 JUNE 2005 - STOCKHOLM, SWEDEN, IEEE, PISCATAWAY, NJ, USA, vol. 3, 30 May 2005 (2005-05-30), pages 1484-1488, XP010855669, DOI: 10.1109/VETECS.2005.1543566 ISBN: 978-0-7803-8887-1 * abstract * * Sections "II. METHOD OF DISTRIBUTED TIMERS" AND "III. ANALYSIS" * | 1-15 | |

-/--

| | | | TECHNICAL FIELDS SEARCHED (IPC) |
|---|---|---|---|
| | | | H04W H04B |

The present search report has been drawn up for all claims

| Place of search | Date of completion of the search | Examiner |
|---|---|---|
| Munich | 22 November 2013 | Martinozzi, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 13 18 2366

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 326 029 A1 (LAKESIDE LABS GMBH [AT]) 25 May 2011 (2011-05-25)<br>* abstract *<br>* paragraph [0007] *<br>* paragraph [0010] *<br>* paragraph [0013] *<br>* paragraph [0017] - paragraph [0020] *<br>* paragraph [0025] *<br>* paragraph [0032] - paragraph [0035] *<br>* paragraph [0041] - paragraph [0045] *<br>* paragraph [0052] - paragraph [0055] *<br>* paragraph [0063] *<br>* paragraph [0067] - paragraph [0068] *<br>----- | 1-15 | |

|  | | | **TECHNICAL FIELDS SEARCHED (IPC)** |
|---|---|---|---|

The present search report has been drawn up for all claims

| Place of search | Date of completion of the search | Examiner |
|---|---|---|
| Munich | 22 November 2013 | Martinozzi, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 18 2366

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2013

| Patent document cited in search report | Publication date | Patent family member(s) | Publication date |
|---|---|---|---|
| EP 2326029 A1 | 25-05-2011 | EP 2326029 A1<br>US 2011124284 A1 | 25-05-2011<br>26-05-2011 |

EPO FORM P0459

For more details about this annex : see Official Journal of the European Patent Office, No. 12/82

**EP 2 844 000 A1**

## REFERENCES CITED IN THE DESCRIPTION

**Patent documents cited in the description**

- US 20110122933 A1

**Non-patent literature cited in the description**

- **P. LIU et al.** CoopMAC: A Cooperative MAC for Wireless LANs. *IEEE Journal on Selected Areas in Communications,* February 2007, vol. 25 (2), 340-354

- **L. MEI-HSUAN et al.** Design, Implementation and Evaluation of an Efficient Opportunistic Retransmission Protoco. *Proc. Of IEEE MobiCom, Beijing, China,* April 2009